(19) Europäisches Patentamt
European Patent Office
Office européen des brevets

(11) **EP 3 226 638 A1**

(12) **EUROPEAN PATENT APPLICATION**
published in accordance with Art. 153(4) EPC

(43) Date of publication:
**04.10.2017 Bulletin 2017/40**

(51) Int Cl.:
***H04W 72/12*** (2009.01)

(21) Application number: **15877461.2**

(22) Date of filing: **16.01.2015**

(86) International application number:
**PCT/CN2015/070915**

(87) International publication number:
**WO 2016/112543 (21.07.2016 Gazette 2016/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co., Ltd.**
**Longgang District**
**Shenzhen, Guangdong 518129 (CN)**

(72) Inventors:
• **WU, Zuomin**
**Shenzhen**
**Guangdong 518129 (CN)**

• **GUAN, Lei**
**Shenzhen**
**Guangdong 518129 (CN)**
• **LI, Yuan**
**Shenzhen**
**Guangdong 518129 (CN)**
• **MA, Sha**
**Shenzhen**
**Guangdong 518129 (CN)**

(74) Representative: **Körber, Martin Hans**
**Mitscherlich PartmbB**
**Patent- und Rechtsanwälte**
**Sonnenstrasse 33**
**80331 München (DE)**

(54) **MESSAGE TRANSMISSION METHOD AND APPARATUS**

(57) Embodiments of the present invention disclose a message transmission method. After obtaining a permission for a channel of an unlicensed spectrum, a base station cyclically sends a first sequence immediately, where a time interval between a first moment and a start moment of a first symbol is not less than a time length of the first sequence of one period, the time length of the first sequence of one period is not greater than a time length of a symbol that does not include a CP, and the first sequence is a characteristic sequence of an LAA-LTE system. According to the method provided in the embodiments of the present invention, a base station achieves an objective of occupying a channel. Further, the base station transmits, on a channel of an unlicensed spectrum, a sequence that is of at least one period and that has a feature of an LAA-LTE system, to directly instruct, on the channel of the current unlicensed spectrum, user equipment to communicate with the base station on the channel of the unlicensed spectrum. Therefore, it is avoided that resource waste is caused by transmitting signaling on an extra channel resource on a licensed spectrum.

Step 301: A base station obtains a permission for a channel of an unlicensed spectrum at a first moment

Step 302: The base station cyclically sends a first sequence from the first moment to a start moment of a first symbol

FIG. 3

**Description**

**TECHNICAL FIELD**

Embodiments of the present invention relate to the communications field, and more specifically, to a method for transmitting information on an unlicensed spectrum by a communications device.

**BACKGROUND**

In the existing wireless communications field, spectrum resources are mainly classified into two types. One type is a licensed spectrum resource, and the other type is an unlicensed spectrum resource. The licensed spectrum resource is a spectrum resource that is designated by a radio regulation committee of a government for a special purpose, for example, a spectrum resource that is used by a mobile operator, or a spectrum resource that is exclusively used in civil aviation, railway, and police. Due to policy exclusiveness, service quality of the licensed spectrum resource can be generally ensured, and scheduling control can be relatively easily performed.

The unlicensed spectrum resource is also a spectrum resource that is designated by a related department of a government. However, for the unlicensed spectrum resource, a radio technology, an operation enterprise, and a service life are not limited, and in addition, service quality of the frequency band is not ensured. A communications device can use an unlicensed spectrum resource for free as long as the communications device meets a requirement on an index such as transmit power or out-of-band leakage. Common communications systems that use an unlicensed spectrum resource for communication include a civil walkie-talkie, a radio remote control, a WiFi system, a Bluetooth communications system, and the like.

In an existing Long Term Evolution (English: Long Term Evolution, LTE for short) system, spectrum resources used by operators are mainly licensed spectrum resources. As users of mobile communications networks increase, and requirements of users on a communication rate and service quality improve, it is already difficult for existing licensed spectrum resources to meet requirements of existing services of operators. In consideration of that a new licensed spectrum is expensive and rare, operators begin to focus on an unlicensed spectrum resource, and expect to use an unlicensed spectrum resource to offload network capacity and improve service quality.

In the LTE system, or a licensed-assisted access using LTE (English: Licensed-Assisted Access Using LTE, LAA-LTE for short) system, or an unlicensed Long Term Evolution (English: Unlicensed Long Term Evolution, U-LTE for short) system, a problem of resource contention requirements to be resolved first, to use an unlicensed spectrum resource.

When an unlicensed spectrum is used to perform communication, a communications device that is most likely to contend for a resource with the LTE system or the LAA-LTE system belongs to a wireless fidelity (English: Wireless Fidelity, WiFi for short) communications system. A method used by the WiFi communications system to contend for a resource is referred to as listen before talk (Listen Before Talk, LBT). A basic principle of the LBT is that: Before sending a signal on a channel, each communications device needs to first detect whether the current channel is idle, that is, whether it can be detected that a nearby node is occupying the channel to send a signal. This detection process is referred to as clear channel assessment (Clear Channel Assessment, CCA). If it is detected in a time segment that the channel is idle, the communications device can send a signal. If it is detected that the channel is occupied, the communications device cannot send a signal currently.

Such a contention-based method of the LBT is widely used in an existing communications system that uses an unlicensed spectrum resource. However, when this contention manner is applied to the LTE system, the LAA-LTE system, or a similar communications system, a new problem appears. This is related to a feature that the system is based on frame scheduling:

The LAA-LTE system is used as an example. The LAA-LTE system inherits a frame structure of the LTE system and a relatively fixed frame structure is needed, and a frame boundary or a subframe boundary is fixed in time. In other words, a frame boundary or a subframe boundary of the LAA-LTE system corresponds to a determinate moment in time, and the frame boundary or the subframe boundary includes a start moment and a stop moment of a frame or a subframe.

When a communications device in the WiFi system determines that a channel can be occupied, or determines that a sending resource of a channel is already obtained through contention, the communications device directly sends a signal including valid data. However, for a communications device in the LAA-LTE system, because a determined moment at which a channel can be occupied is random, the determined moment at which the channel can be occupied usually cannot be aligned with the subframe boundary of the LAA-LTE system. To prevent the channel from being occupied by another communications device, in an existing method, when determining that a channel can be occupied, a communications device in the LAA-LTE system immediately sends a fill-in signal, and does not send a signal carrying one of a control channel, a data channel, or a reference signal, or a combination thereof until a start moment of a next subframe.

To communicate with a corresponding communications device on an unlicensed spectrum resource, the communications device in the LAA-LTE system needs to send an indication message on a licensed spectrum resource, so as to indicate that information is to be transmitted on an unlicensed spectrum resource from a start moment of a subframe. This occupies an extra channel resource of a licensed spectrum. Consequently, this strains already insufficient channel resources of licensed spectrums.

## SUMMARY

Embodiments of the present invention provide a data transmission method and apparatus, so as to resolve a problem in the prior art that an extra licensed spectrum resource needs to be occupied to transmit an indication message, so as to indicate that information is to be transmitted on a channel of an unlicensed spectrum.

According to a first aspect, an embodiment of the present invention provides a data transmission method, including:

obtaining, by a base station, a permission for a channel of an unlicensed spectrum at a first moment; and

cyclically sending, by the base station, a first sequence from the first moment to a start moment of a first symbol, where

a time interval between the first moment and the start moment of the first symbol is not less than a time length of the first sequence of one period;

the time length of the first sequence of one period is not greater than a time length of a symbol that does not include a CP; and

the first sequence is a characteristic sequence of an LAA-LTE system.

According to a second aspect, an embodiment of the present invention provides a data transmission method, including:

detecting, by a receiving device at a second moment, a first sequence that is cyclically sent by a base station on a channel of an unlicensed spectrum, where the first sequence is a characteristic sequence of an LAA-LTE system, a time length of the first sequence of one period is not greater than a time length of one symbol that does not include a CP, and the second moment is not later than a start moment of a first symbol at which transmission of the first sequence is stopped; and

determining, by the receiving device according to the first sequence, that the base station obtains a permission for the channel.

According to a third aspect, an embodiment of the present invention provides a data transmission apparatus, including a transceiver and a processor, where

scheduled by the processor, the transceiver is configured to obtain a permission for a channel of an unlicensed spectrum at a first moment;

the transceiver is further configured to cyclically send a first sequence from the first moment to a start moment of a first symbol, where

a time interval between the first moment and the start moment of the first symbol is not less than a time length of the first sequence of one period;

the time length of the first sequence of one period is not greater than a time length of a symbol that does not include a CP; and

the first sequence is a characteristic sequence of an LAA-LTE system.

According to a fourth aspect, an embodiment of the present invention provides a data transmission apparatus, including a receiver and a processor, where

the receiver is configured to receive a signal on a channel of an unlicensed spectrum;

the processor is configured to detect, at a second moment according to the signal received by the receiver, a first sequence that is cyclically sent by a base station on the channel of the unlicensed spectrum, where the first sequence is a characteristic sequence of an LAA-LTE system, a time length of the first sequence of one period is not greater than a time length of one symbol that does not include a CP, and the second moment is not later than a start moment of a first symbol at which transmission of the first sequence is stopped; and

the processor is further configured to determine, according to the first sequence, that the base station obtains a permission for the channel.

Based on the foregoing technical solutions, in the embodiments of the present invention, after a permission for a channel of an unlicensed spectrum is obtained, a first sequence having a feature of an LAA-LTE system may be cyclically sent immediately. In this way, a channel is occupied, so that it is avoided that the channel is occupied by another communications device. In addition, a base station directly instructs, on a channel of a current unlicensed spectrum, user equipment to communicate with the base station on the channel of the unlicensed spectrum. Therefore, it is avoided that resource waste is caused by transmitting signaling on an extra channel resource on a licensed spectrum.

## BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1 is a schematic diagram of a frame structure applied to an LAA-LTE system;
FIG. 2 is a schematic architectural diagram of a communications system;
FIG. 3 is a flowchart of a message transmission method according to an embodiment of the present invention;
FIG. 4 is a schematic diagram of a sequence diagram for sending a first sequence according to an embodiment of the present invention;
FIG. 5 is a schematic diagram of a sequence diagram for sending a first sequence and a second sequence according to an embodiment of the present invention;
FIG. 6 is a flowchart of a message transmission method according to an embodiment of the present invention;
FIG. 7 is a structural diagram of a message transmission apparatus according to an embodiment of the present invention; and
FIG. 8 is a structural diagram of a message transmission apparatus according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

It should be understood that, the technical solution in this embodiment of the present invention may be applied to an LAA-LTE system that uses an unlicensed frequency band, or may be applied to another communications system that has a similar fixed subframe boundary or symbol boundary and has a resource contention requirement.

It should be understood that a symbol mentioned in the technical solutions of the embodiments of the present invention may be an orthogonal frequency division multiplexing (English: Orthogonal Frequency Division Multiplexing, OFDM for short) symbol in an LAA-LTE system or an LTE system. Specifically, the OFDM symbol includes a cyclic prefix (English: Cyclic Prefix, CP for short) part and an information segment part. An information segment part includes all information of an OFDM symbol, and a CP is a repetition of a partial signal of the information segment. The symbol mentioned in the technical solutions of the embodiments of the present invention may be another type of symbol for communication, and is not limited in the present invention.

It should be understood that the OFDM symbol mentioned in the embodiments of the present invention has attributes of a time dimension and a frequency dimension. The attribute of the time dimension includes a time length of the OFDM symbol, and the attribute of the frequency dimension includes a quantity of subcarriers, a bandwidth of a subcarrier, and the like.

It should be understood that a communications system that is mentioned in the embodiments of the present invention and in which a base station and user equipment are located is a communications system that has a predefined or fixed subframe start moment, subframe end moment, symbol start moment, and symbol end moment. In such a communications system, time is divided by using a fixed time unit. That is, when a granularity of a time unit, and a start moment and an end moment of a time unit are determined, start moments and end moments of previous and subsequent time units may be known. In the embodiments of the present invention, a subframe boundary refers to a subframe start moment or a subframe end moment, a symbol boundary refers to a start moment or an end moment of a symbol. A start moment of a subframe is an end moment of a last subframe, and a start moment of a symbol is an end moment of a last symbol.

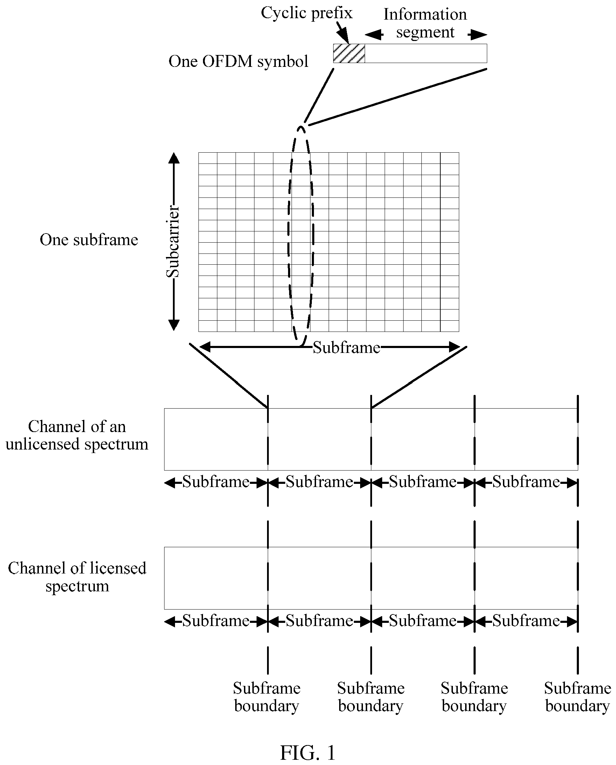

It should be further understood that, in the embodiments of the present invention, in a communications system run by a same operator in a particular region, for example, the LAA-LTE system, a subframe start moment, a subframe end moment, and a subframe boundary of a signal transmitted on a channel of an unlicensed spectrum are aligned with a subframe start moment, a subframe end moment, and a subframe boundary of a signal transmitted on a channel of a licensed spectrum. FIG. 1 is a schematic diagram of a frame structure applied to an LAA-LTE system. In a time dimension, it is assumed that a smallest time unit in the system is $T_s$, one $T_s$ = 1/(15000×2048) second. A time length of an OFDM symbol that does not include a CP is 2048 × $T_s$, and is approximately equal to 66.7 microseconds. A time length of a subframe is 1 ms, and there are specifically two subframe formats. One is a normal cyclic prefix (English: Normal Cyclic Prefix, NCPfor short) subframe format. An NCP subframe includes 14 OFDM symbols. The OFDM symbols are numbered from 0 to 13, and time lengths of a $0^{th}$ OFDM symbol and a $7^{th}$ OFDM symbol are 2208×$T_s$, and time lengths of the other 12 OFDM symbols are 2192×$T_s$. The $0^{th}$ OFDM symbol to a $6^{th}$ OFDM symbol are defined as odd-numbered timeslots, and the $7^{th}$ OFDM symbol to a $13^{th}$ OFDM symbol are defined as even-numbered timeslots. The other is an extended cyclic prefix (English: Extended Cyclic Prefix, ECP for short) subframe format. An ECP subframe includes 12 OFDM symbols. A time length of each OFDM symbol is 2560×$T_s$. The OFDM symbols are numbered from 0 to 11, a $0^{th}$ OFDM symbol to a $5^{th}$ OFDM symbol are defined as odd-numbered timeslots, and a $6^{th}$ OFDM symbol to an $11^{th}$ OFDM symbol are defined as even-numbered timeslots.

In a frequency dimension, it can be seen from FIG. 1 that, one OFDM symbol may be divided into multiple subcarriers, and each subcarrier corresponds to a bandwidth.

Further, from the perspectives of a licensed spectrum resource and an unlicensed spectrum resource, it may be seen from FIG. 1 that subframe boundaries are aligned in time in OFDM to which different spectrum resources are applied.

It should be further understood that, in the embodiments of the present invention, user equipment (English: User Equipment, UE for short) may be referred to as a terminal (Terminal), a mobile station (English: Mobile Station, MS for short), a mobile terminal (Mobile Terminal), or the like. The user equipment may communicate with one or more core networks by using a radio access network (English: Radio Access Network, RAN for short). For example, the user equipment may be a mobile phone (or referred to as a "cellular" phone), a computer with a mobile terminal, or the like. For example, the user equipment may be further a portable, pocket-sized, handheld, computer built-in, or vehicle-mounted mobile apparatus, which exchanges voice and/or data with the radio access network.

In the embodiments of the present invention, a base station may be an evolved NodeB (English: Evolutional Node B, eNB or e-NodeB for short) in the LTE system or the LAA-LTE system, a macro base station, a micro base station (also referred to as a "small cell"), a pico base station, an access point (English: Access Point, AP for short), or a transmission point (English: Transmission Point, TP for short). This is not limited in the present invention. However, for ease of description, the following embodiments are described by using a base station and user equipment as examples.

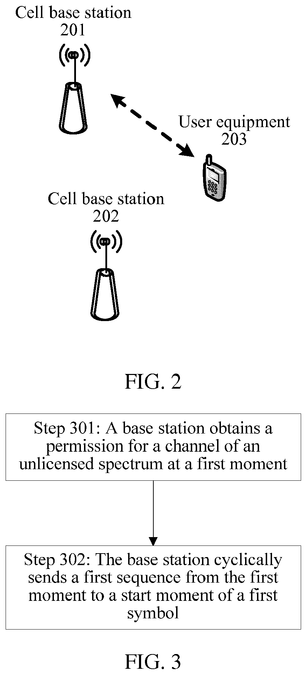

FIG. 2 shows an application scenario in which a solution provided in an embodiment of the present invention can be used. The scenario includes a cell base station 201, a cell base station 202 neighboring to the cell base station 201, and user equipment 203 that is covered by the cell base station 201 and that communicates with the cell base station 201. The cell base station 201 and the user equipment 203 are specifically communications devices that support communication performed on an unlicensed spectrum resource and that have a fixed subframe boundary and a fixed symbol boundary. A frequency band supported by the cell base station 202 may be the same as that supported by the cell base station 201. The cell base station 202 and the cell base station 201 may be communications devices of a same type, or may be communications devices of different types. For example, the cell base station 201 may be a base station of the LAA-LTE system, and the corresponding user equipment may be user equipment of the LAA-LTE system; the cell base station 202 may also be a base station of the LAA-LTE system, or may also be a wireless router, a wireless repeater, or user equipment of a WiFi system.

In a specific application scenario, when the cell base station 201 sends a signal to the user equipment 203 by using a channel of an unlicensed spectrum, the cell base station 201 first needs to obtain a permission for the channel of the unlicensed spectrum. A specific method for obtaining the permission for the channel may be the foregoing LBT method or may be another method, and is not limited in the present invention.

In a specific implementation process, a moment at which the cell base station 201 obtains the permission for the channel of the unlicensed spectrum usually cannot be aligned with a predetermined subframe boundary of the cell base station 201. In consideration of that a user of an unlicensed spectrum resource is not limited, if the cell base station 201 does not occupy the channel of the unlicensed spectrum resource when obtaining the permission for the channel, the channel may be preempted by another communications device, for example, the cell base station 202.

To avoid occurrence of the foregoing case, in a specific implementation process, even if the moment at which the cell base station 201 obtains the permission for the channel of the unlicensed spectrum cannot be aligned with the predetermined subframe boundary, the cell base station 201 also sends a fill-in signal from the moment at which the permission is obtained to a next subframe boundary. Even though this method resolves a problem that the cell base station 201 randomly accesses the channel, some sending resources are apparently wasted. Moreover, the cell base station 201 needs to notify, on a channel of a licensed spectrum, the user equipment 203 of the moment at which data is transmitted on the channel of the unlicensed spectrum. However, apparently, in this method, an extra channel resource of the licensed spectrum is occupied. Consequently, this strains the channel resource of the licensed spectrum.

An embodiment of the present invention provides an information transmission method. With reference to the foregoing example, the cell base station 201 may send a pilot sequence on the channel of the unlicensed spectrum by using a time for originally sending a fill-in signal, so as to provide a condition for the user equipment 203 to detect that the cell base station 201 starts transmitting a signal on the channel of the unlicensed spectrum.

The following describes in detail the embodiments of the present invention by using specific examples. It should be noted that these examples are used only to help a person skilled in the art to better understand the embodiments of the present invention, instead of limiting the scope of the embodiments of the present invention. It should be understood that, in various embodiments of the present invention, sequence numbers of various processes do not indicate an execution sequence, and an execution sequence of the various processes should be determined according to functions and internal logic thereof, and shall not constitute any limitation on implementation processes in the embodiments of the present invention.

**Embodiment 1**

An embodiment of the present invention provides a message transmission method. The method provided in this embodiment of the present invention may be applied to a scenario of a channel of an unlicensed spectrum. FIG. 3 is a schematic flowchart of the method according to this embodiment of the present invention. The shown method may be executed by a base station. A procedure includes the following steps.

Step 301: A base station obtains a permission for a channel of an unlicensed spectrum at a first moment.

Step 302: The base station cyclically sends a first sequence from the first moment to a start moment of a first symbol.

A time interval between the first moment and the start moment of the first symbol is not less than a time length of the first sequence of one period.

The time length of the first sequence of one period is not greater than a time length of a symbol that does not include a CP.

The first sequence is a characteristic sequence of an LAA-LTE system.

In a specific process of performing step 301, optionally, the base station obtains the permission for the channel of the unlicensed spectrum by using a contention-based method. More specifically, the base station may obtain the permission based on the principle of the LBT by using the contention-based method. Optionally, the base station may obtain the permission for the channel of the unlicensed spectrum after coordinating with or performing scheduling with a neighboring communications device. Optionally, the base station may obtain the permission for the channel of the unlicensed spectrum by using a preconfigured resource use pattern.

In a specific process of performing step 301, the first moment at which the base station obtains the permission for the channel of the unlicensed spectrum may be any moment, that is, the first moment is unrelated to a subframe boundary or a symbol boundary that is used by the base station. The first moment may be or may be not aligned with the subframe boundary or the symbol boundary. In other words, a value of a time interval between the first moment and a next symbol boundary that is closest to the first moment is a non-negative random number less than a time length of one symbol.

In a specific process of performing step 302, the base station sends a variable-length channel reservation signal. A time length of the channel reservation signal is related to the time interval between the first moment and the symbol boundary or a fixed subframe boundary. Specifically, the channel reservation signal includes the first sequence, and the time length of the first sequence of one period is not greater than the time length of the symbol that does not include a CP. The base station sends the first sequence from the first moment, and stops sending the first sequence at the start moment of the first symbol. The variable channel reservation signal is used to reserve the channel of the unlicensed spectrum, and avoids that the channel is preempted by another communications device because the base station does not occupy the channel of the unlicensed spectrum in time after obtaining the permission for the channel.

In a specific implementation process, it should be understood that, in consideration of a time consumed by operation processing by the base station and/or a time consumed by switching the base station from a receiving state to a sending state, a very small time interval may exist between the first moment at which the base station obtains the permission for the channel of the unlicensed spectrum and a first moment at which the base station sends the first sequence. A person skilled in the art may understand that this very small time interval does not substantially affect the method provided by this embodiment of the present invention. In the solution provided in this embodiment of the present invention, it is considered that the two moments are a same moment.

In a specific process of performing step 302, the time interval between the first moment and the start moment of the first symbol is not less than the time length of the first sequence of one period. In this way, it is ensured that the base station sends at least the first sequence of one complete period. When performing detection on the channel of the unlicensed spectrum, corresponding user equipment or a corresponding neighboring-cell base station may receive the first sequence of one complete period. On this basis, the corresponding user equipment or the corresponding neighboring-cell base station performs a subsequent operation according to the first sequence.

In a specific process of performing step 302, the time interval between the start moment of the first symbol and the first moment is not less than the time length of the first sequence of one period, and the time length of the first sequence of one period is not greater than the time length of the symbol that does not include a CP. Therefore, when a time interval between the first moment and a start moment of a first symbol after the first moment is not less than the time length for which the first sequence of one period lasts, the start moment of the first symbol may be a start moment of any symbol after the first moment. When the time interval between the first moment and the start moment of the first symbol after the first moment is less than the time length for which the first sequence of one period lasts, the start moment of the first symbol may be a start moment of a second symbol after the first moment or a start moment of a symbol after a start moment of a second symbol.

In a specific process of performing step 302, it should be understood that randomness of the first moment causes uncertainty of the time interval between the first moment and the start moment of the first symbol. As a result, because the first sequence has a determinate time length, a quantity of periods in which the base station sends the first sequence in the time interval may be an integer or a non-integer.

In a specific process of performing step 302, it should be understood that in the time interval between the first moment and the start moment of the first symbol, because the base station sends the first sequence cyclically, the base station no longer sends an extra CP when sending the first sequence.

In a specific process of performing step 302, the first sequence is a characteristic sequence of the LAA-LTE system, the LTE system, or another communications system. A corresponding receiving device, such as user equipment, a neighboring base station, or another receiving device of a same system, may detect and determine, according to the characteristic sequence, that a device of the LAA-LTE system currently obtains the permission for the channel of the unlicensed spectrum. Therefore, it is avoided that an extra channel resource of a licensed spectrum is occupied because the base station sends an indication message on a channel of the licensed spectrum.

In a specific implementation process, it should be understood that LTE systems using an unlicensed spectrum resource for communication are collectively referred to as the LAA-LTE system, this name constitutes no limitation on the application scope of this embodiment of the present invention, and any system that is based on the LTE system and that uses the unlicensed spectrum resource for communication shall fall within the protection scope of this embodiment of the present invention.

Based on the foregoing technical solution, according to the method provided in this embodiment of the present invention, after obtaining a permission for a channel of an unlicensed spectrum, a base station cyclically sends a first sequence immediately, where a time interval between a first moment and a start moment of a first symbol is not less than a time length of the first sequence of one period, the time length of the first sequence of one period is not greater than a time length of a symbol that does not include a CP, and the first sequence is a characteristic sequence of an LAA-LTE system. A base station achieves an objective of occupying a channel and preventing the channel from being preempted by another communications device. Further, the base station transmits, on a channel of an unlicensed spectrum, a sequence that is of at least one period and that has a feature of an LAA-LTE system, to directly instruct, on the channel of the current unlicensed spectrum, user equipment to communicate with the base station on the channel of the unlicensed spectrum. Therefore, it is avoided that resource waste is caused by transmitting signaling on an extra channel resource on a licensed spectrum.

Further, optionally, in a specific process of performing step 302, the time interval between the first moment and the start moment of the first symbol is less than a time length of two symbols. Specifically, when a time interval between the first moment and a start moment of a first symbol after the first moment is not less than the time length of the first sequence of one period, the start moment of the first symbol may be specifically the start moment of the first symbol after the first moment. When the time interval between the first moment and the start moment of the first symbol after the first moment is less than the time length of the first sequence of one period, the start moment of the first symbol may be specifically a start moment of a second symbol after the first moment. That is, the time interval between the start moment of the first symbol and the first moment is greater than a time length of one symbol and is less than a time length of two symbols. Therefore, under the circumstance of ensuring that the base station sends the first sequence of at least one complete period, the first sequence is sent for a time length of an incomplete symbol or fewest complete symbols, achieving an objective of fully using the channel resource of the unlicensed spectrum.

In another optional implementation manner, in a specific process of performing step 302, in the manner of obtaining the permission for the channel of the unlicensed spectrum based on the principle of the LBT by using the contention-based method, the time length of the first sequence of one period may be not greater than a time length that is used by a system to perform clear channel assessment. For example, in the LAA-LTE system, the time length of the first sequence of one period may be not greater than a time length that is used by the base station or a neighboring-cell base station to perform CCA detection. In this way, a neighboring-cell base station or a WiFi device or another communications device in the LAA-LTE system that shares the channel of the unlicensed spectrum with a current-cell base station detects the first sequence while performing CCA detection.

In a specific implementation process, optionally, the first sequence may carry indication information, used to indicate a quantity of symbols that correspond to the time interval. Specifically, when the time interval is greater than or equal to the time length of one symbol that does not include a CP, the indication information carried by the first sequence is used to indicate that the quantity of symbols that correspond to the time interval is 1. When the time interval is less than the time length of one symbol that does not include a CP, the indication information carried by the first sequence is used to indicate that the quantity of symbols that correspond to the time interval is 0. In a specific implementation process, the user equipment communicating with the base station may determine, by detecting the first sequence, a moment for stopping sending the first sequence and starting sending another signal.

In another possible implementation manner, optionally, the first sequence may carry indication information, used to indicate a quantity of symbols that correspond to the time interval. Specifically, when the time interval is greater than or equal to a time length of one symbol, the indication information carried by the first sequence is used to indicate that the quantity of symbols that correspond to the time interval is 1. When the time interval is less than the time length of one symbol, the indication information carried by the first sequence is used to indicate that the quantity of symbols that correspond to the time interval is 0. In a specific implementation process, the user equipment communicating with the base station may determine, by detecting the first sequence, a moment for stopping sending the first sequence and starting sending another signal.

In a specific implementation process, optionally, the first sequence may further carry other information, and the information may include one or more of the following:

1. operator identification information, so that the user equipment communicating with the base station determines the base station sending the first sequence, where a neighboring-cell base station relative to a current-cell base station may also identify the current-cell base station by using the operator identification information carried by the first sequence;

2. information about a licensed spectrum resource supported by the base station, so that the user equipment determines, according to the first sequence, whether the base station also supports communication performed on a channel of a licensed spectrum, or determines a channel of a licensed spectrum on which the base station performs communication, where further, when the base station supports communication performed on both the licensed spectrum and the unlicensed spectrum, the user equipment may assist in carrier coarse synchronization of the unlicensed spectrum by using synchronization information provided by a reference signal of the licensed spectrum;

3. information about a quantity of remaining available symbols of a current subframe when the base station obtains the permission for the channel of the unlicensed spectrum;

4. information about a length of duration in which the base station currently transmits a signal; or

5. serving cell identification information or partial serving cell identification information.

In a specific implementation process, optionally, the first sequence includes a constant amplitude zero auto correlation (English: Constant Amplitude Zero Auto Correlation, CAZAC for short) sequence for which both auto-correlation features and/or cross-correlation features of a time domain and a frequency domain are very desirable. Optionally, the first sequence may include a Zadoff-Chu (English: Zadoff-Chu, ZC for short) sequence. Particularly, the first sequence may include a centrosymmetric ZC sequence.

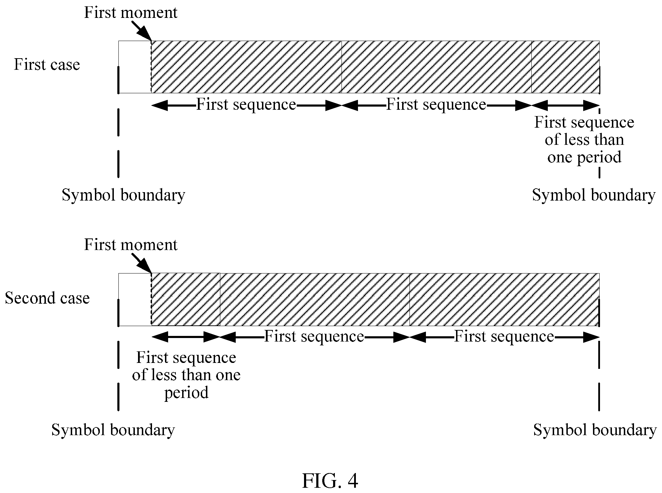

In a specific process of performing step 302, optionally, in a first case shown in FIG. 4, when the base station cyclically sends the first sequence from the first moment, the base station sends the first sequence from a start location of the first sequence. For example, it is assumed that the first sequence includes N elements, the elements are sequentially numbered 0, 1,2, ..., and N-1, and N is a positive integer. In this case, the base station sends the first sequence from a $0^{th}$ element of the first sequence from the first moment. When a boundary of a first symbol has not been reached as the $N^{th}$ element is sent, the base station resends the first sequence from the $0^{th}$ element of the first sequence.... This is repeated cyclically until the boundary of the first symbol is reached. This manner is simple and practicable in a specific implementation process, and complexity of the base station can be reduced.

In a specific process of performing step 302, optionally, in a second case shown in FIG. 4, when the base station periodically sends the first sequence from the first moment, the base station cyclically sends the first sequence from a $k^{th}$ element of the first sequence. The first sequence includes N elements, the N elements are sequentially numbered 0, 1, ..., and N-1, and N is a positive integer. k satisfies $k=(N-(M \bmod N)) \bmod N$, where M is specifically a quantity of elements of the first sequences corresponding to the time interval between the first moment and the start moment of the first symbol. More specifically, M satisfies $M = \lfloor T_i / T_u \rfloor$, where $T_i$ is the time interval between the first moment and the start moment of the first symbol, $T_u$ is a time length of an element of the first sequence, and $\lfloor \rfloor$ indicates rounding down. According to this sending method, the base station sends the last element of the first sequence just at the start moment of the first symbol. In other words, in the second case shown in FIG. 4, the start moment of the first symbol is just aligned with the last element of the cyclically sent first sequence. The user equipment communicating with the base station may perform, according to this feature, time synchronization on a signal received on the channel of the unlicensed spectrum.

As should be known, it may be understood that the foregoing element included in the first sequence refers to a smallest time unit $T_u$ included in the first sequence, and elements of the first sequence may be a multiple of the smallest time unit of the system. For example, in the LAA-LTE system, $T_u = i \cdot T_s$, where i may be a positive integer or may be a fraction, and $T_s$ is a smallest time unit in the LAA-LTE system. When the element of the first sequence is an integer multiple of the smallest time unit of the system, but a time length L of the first sequence cannot be exactly divided by the elements of the first sequence, a quantity of elements of the first sequence of one period is $N=\lceil L/T_u \rceil$, where $\lceil \ \rceil$ indicates rounding up. When the element of the first sequence is a fraction multiple of the smallest time unit of the system, a fraction i always exists to enable the time length L of the first sequence to be exactly divided by the element $T_u$ of the first sequence. That is, a quantity of elements of the first sequence of one period is $N=L/T_u$.

Correspondingly, in the second case shown in FIG. 4, M is a maximum value that satisfies that $M \cdot T_u$ can be exactly divided by $T_s$, and $M \leq \lfloor T_i / T_u \rfloor$. $T_i$ is a time interval between the first moment and the start moment of the first symbol, $T_u$ is a time length of one element of the first sequence, $T_s$ is the smallest time unit of the system, and $\lfloor \ \rfloor$ indicates rounding down.

In a specific implementation process, optionally, a frequency domain sequence that is in a frequency domain and that corresponds to the first sequence whose time domain period is extended to a symbol that does not include a CP satisfies a property of mapping with an equal subcarrier spacing. Specifically, inverse discrete Fourier transform (English: Inverse Discrete Fourier Transform, IDFT for short) or inverse fast Fourier transform (English: Inverse Fast Fourier Transform, IFFT for short) may be performed on a frequency domain sequence on which mapping with an equal subcarrier spacing is performed, so as to transform the frequency domain sequence to a time domain, to obtain the first sequence whose period is extended to an OFDM symbol that does not include a CP.

In a specific implementation process, optionally, the method of the mapping with an equal subcarrier spacing includes, but is not limited to, direct mapping with an equal subcarrier spacing and symmetric mapping with an equal subcarrier spacing. These two methods of mapping with an equal subcarrier spacing are described below by using examples, and a location mentioned in the following descriptions refers to a location corresponding to a frequency domain subcarrier.

It is assumed that a frequency domain sequence before mapping includes S elements, and S is a positive integer not less than two. The S elements are sequentially numbered 0, 1, ..., and S-1; n indicates an $n^{th}$ element of the S elements of the frequency domain sequence before mapping; I indicates a frequency domain mapping subcarrier interval, and I is a positive integer not less than two; m indicates a mapped location of an element numbered 0 in the frequency domain sequence, and m is an integer not greater than I-1; F indicates a quantity of subcarriers in a frequency domain, that is, a quantity of locations that may be mapped, and F satisfies $F \geq S \times I$. Available mapped locations in the frequency domain are numbered 0, 1, ..., and F-1. It should be known that subcarriers that may be mapped in the frequency domain do not include a direct current (English: Direct Current, DC for short) subcarrier.

A location x to which an $n^{th}$ element of a frequency domain sequence on which direct mapping with an equal subcarrier spacing is performed is mapped satisfies:

$$x = n \cdot I + m, \quad 0 \leq n \leq S-1, \ 0 \leq x \leq F-1;$$

and

a location x to which an $n^{th}$ element of a frequency domain sequence on which symmetric mapping with an equal subcarrier spacing is performed is mapped satisfies:

$$x = \begin{cases} n \cdot I + m & 0 \leq n \leq S/2 - 1, \\ n \cdot I + (I - 1 - m) & S/2 \leq n \leq S-1, \end{cases} \quad 0 \leq x \leq F-1.$$

A location x to which an element of the frequency domain sequence is mapped satisfies $0 \leq x \leq F - 1$. At a frequency location that is not mapped, a mapping signal of the corresponding frequency location is 0. It should be known that because the frequency domain sequence corresponds to the first sequence whose period is extended to the symbol that does not include a CP, and the frequency domain mapping interval I is an integer, it may be known by using a simple mathematic relationship that a time length, which satisfies this relationship, of the first sequence of one period is 1/I of the time length of the symbol that does not include a CP. For example, in the LAA-LTE system, the time length of the symbol that does not include a CP is $2048 \times T_s$. If the frequency domain mapping interval I is 4, a time length of a first sequence obtained by transforming, to a time domain, a sequence on which frequency domain mapping with a spacing is performed is $2048 \times T_s \times (1/4) = 512 \times T_s$.

In a specific implementation process, optionally, the frequency domain sequence includes a CAZAC sequence for which both auto-correlation features and/or cross-correlation features of a time domain and a frequency domain are very desirable. Optionally, the frequency domain sequence may include a ZC sequence. An expression of a base sequence of the ZC sequence may be:

$$a_{r,S}(n) = \begin{cases} \exp[-\dfrac{j2\pi \cdot r}{S}(q \cdot n + \dfrac{n \cdot (n+1)}{2})] & S \text{ is an odd number}, n = 0,1,\cdots,S-1 \\ \exp[-\dfrac{j2\pi \cdot r}{S}(q \cdot n + \dfrac{n^2}{2})] & S \text{ is an even number}, n = 0,1,\cdots,S-1 \end{cases},$$

where S is a positive integer, r is any integer relatively prime to S, each value of r corresponds to one base sequence, a value of q is an integer and may be set to 0, and $a_{r,S}(n)$ indicates an $n^{th}$ element in a ZC sequence when r and S are given.

Particularly, the frequency domain sequence may include a centrosymmetric ZC sequence. An expression of a base sequence of the centrosymmetric ZC sequence may be:

$$a_{r,S}(n) = \begin{cases} \exp[-\dfrac{j\pi \cdot r \cdot n \cdot (n+1)}{S+1}], & 0 \le n \le S/2-1 \\ \exp[-\dfrac{j\pi \cdot r \cdot (n+1) \cdot (n+2)}{S+1}], & S/2 \le n \le S-1 \end{cases},$$

where S is an even number, r is any integer relatively prime to S+1, each value of r corresponds to one base sequence, and $a_{r,S}(n)$ indicates an $n^{th}$ element in a ZC sequence when r and S are given.

The ZC sequence has the following features: Cyclic shift sequences of a base sequence are orthogonal; when S is a prime number, a value of cross correlation between any two sequences is very low; a small quantity of truncations and cyclic extensions barely affect the features of the sequence. Therefore, it may be known that when a length S of a ZC sequence is given, a quantity of available base sequences is a quantity of possible values of r in the foregoing formula, that is, equal to a quantity of integers that are relatively prime to the length S of the sequence.

In a specific implementation process, the frequency domain sequence may be an equal-length ZC sequence. To meet a requirement on a length of the frequency domain sequence, the frequency domain sequence may also be a cyclic shift ZC sequence or a truncation ZC sequence. Preferably, the frequency domain sequence is a centrosymmetric ZC sequence. Further, under the circumstance that lengths of frequency domain sequences are the same, different r or different quantities of offsets of cyclic shifts may be used to carry the foregoing information or a combination of the information.

Optionally, at frequency locations that are not mapped, mapping signals of the corresponding frequency locations are 0, so that the user equipment communicating with the base station or another communications device performs interference detection according to these frequency locations whose mapping signals are 0. Specifically, using the user equipment as an example, when the user equipment receives the first sequence some of whose mapping signals are 0, the user equipment may detect a signal power at frequency locations whose mapping signals are 0, to estimate a power of an interference signal according to the detected signal power.

It should be known that interference detection should be completed in a frequency domain. Therefore, a signal used for detection needs to last, in time, at least a length of one symbol that does not include a CP. Further, optionally, in a specific process of performing step 302, the time interval between the first moment and the start moment of the first symbol is greater than a time length of one symbol and is less than a time length of two symbols. Specifically, the start moment of the first symbol may be a start moment of a second symbol after the first moment, that is, the time interval between the start moment of the first symbol and the first moment is greater than a time length of one symbol and is less than a time length of two symbols. Therefore, the base station may send the first sequence by using a time length of at least one complete symbol. In this way, it is ensured that the user equipment may detect signal power at a frequency location whose mapping signal is 0, to estimate power of an interference signal according to the detected signal power.

In a specific implementation process, optionally, because mapping with an equal subcarrier spacing is performed on the frequency domain sequence, when sequence mapping is performed, a power at a subcarrier that is not mapped may be evenly added to a subcarrier to which the frequency domain sequence is mapped, that is, during frequency domain mapping, power boosting (English: Power boosting) may be performed on the frequency domain sequence. Specifically, each mapped element of the frequency domain sequence may be multiplied by a power boosting factor

$\sqrt{\dfrac{F}{S}}$ . S indicates a quantity of elements of the frequency domain sequence, and F indicates a quantity of subcarriers that may be mapped in a frequency domain.

In a specific implementation process, optionally, the base station may indicate, in a predefined or preconfigured manner or in a manner of performing notification by using signaling of a channel resource of a licensed spectrum, one of the following information or a combination thereof: a time length of a first sequence of one period, a mapping interval I of a frequency domain sequence, a sequence candidate set of a first sequence, or a power boosting factor.

In a specific implementation process, optionally, the base station determines the time length of the first sequence according to cell coverage of the base station. In other words, the time length of the period of the first sequence is related to coverage of a corresponding cell, and a time length of a period of the first sequence corresponding to a cell having large coverage is greater than a time length of a period of the first sequence corresponding to a cell having small coverage.

In another optional implementation manner, as mentioned above, a frequency domain sequence that is in a frequency domain and that corresponds to the first sequence whose time domain period is extended to a symbol that does not include a CP satisfies a feature of frequency equal interval mapping. In a time of the symbol that does not include a CP, a quantity of times the first sequence is repeated is related to the frequency domain mapping interval I. Therefore, the frequency domain mapping interval corresponds to coverage of a cell served by the base station. A frequency domain mapping interval corresponding to a cell having large coverage is less than a frequency domain mapping interval corresponding to a cell having small coverage.

Because coverage of a cell of the base station is in direct proportion to a transmit power of the base station, in a specific implementation process, optionally, the base station determines the time length of the first sequence according to the transmit power of the base station. In other words, the time length of the period of the first sequence is related to a transmit power of a corresponding cell, and a time length of a period of a first sequence corresponding to a cell having a high transmit power is greater than a time length of a period of a first sequence corresponding to a cell having a low transmit power. Further, optionally, the base station may determine the time length of the first sequence according to a maximum transmit power supported by the base station, or may determine the time length of the first sequence according to a transmit power used by the base station each time in transmission.

In another optional implementation manner, as mentioned above, a frequency domain sequence that is in a frequency domain and that corresponds to the first sequence whose time domain period is extended to a symbol that does not include a CP satisfies a feature of frequency equal interval mapping. In a time of the symbol that does not include a CP, a quantity of times the first sequence is repeated is related to the frequency domain mapping interval I. Therefore, the frequency domain mapping interval corresponds to a transmit power of the base station, and a frequency domain mapping interval selected by a base station having a high transmit power is less than a frequency domain mapping interval selected by a base station having a low transmit power.

In a specific implementation process, optionally, the method further includes the following steps.

Step 303: The base station sends valid data from the start moment of the first symbol, where a signal of the valid data includes one of the following or a combination thereof: a physical downlink control channel (English: Physical Downlink Control Channel, PDCCH for short), an enhanced-physical downlink control Channel (English: Enhanced-Physical Downlink Control Channel, ePDCCH for short), a physical downlink shared channel (English: Physical Downlink Shared Channel, PDSCH for short), a common reference signal (English: Common Reference Signal, CRS for short), a demodulation reference signal (English: Demodulation Reference Signal, DMRS for short), a channel state information-reference signal (English: Channel State Information-Reference Signal, CSI-RS for short), or a discovery reference signal (English: Discovery Reference Signal, DRS for short).

The base station may send the signal of the valid data as fast as possible after obtaining the permission for the channel of the unlicensed spectrum, so as to further improve usage efficiency of a channel resource of the unlicensed spectrum. The corresponding user equipment may determine, according to the first sequence, the start moment of the first symbol at which the valid data is sent, so as to receive the valid data from the start moment of the first symbol, and demodulate and decode the received valid data.

It should be understood that in the prior art, in consideration of that the corresponding user equipment needs to know a start location of the valid data when decoding the data, the valid data can usually start to be sent on the channel of the unlicensed spectrum only from a start moment of a subframe. Otherwise, the user equipment can perform only blind detection. As a result, power consumption and complexity of the user equipment are increased. However, according to the method provided in this embodiment of the present invention, the user equipment may determine, according to the first sequence, the start moment of the first symbol at which the valid data starts to be sent, that is, may directly know a start location at which the valid data is decoded. Therefore, it is avoided that operation complexity and power consumption on a side of the user equipment are increased.

A receiving device may obtain at least one of system AGC settings, fine time-frequency synchronization information, or channel feature estimation information by detecting the first sequence and a pilot signal that is carried in information of the valid data. It should be known that the receiving device may estimate a frequency offset in a manner of pairing reference signals separated from each other with an interval to estimate a phase difference. With reference to a system parameter of the LAA-LTE system, to obtain fine frequency synchronization that can ensure demodulation performance, a time length of an interval between reference signals used to estimate a frequency offset is not less than three symbols. Preferably, the time length of the interval between the reference signals used to estimate the frequency offset is four symbols. That is, a receiving end may jointly estimate a frequency offset by using reference signals on an $n_0^{th}$ symbol and an $(n_0+3)^{th}$ symbol, where no is any symbol index. Optionally, the receiving device may jointly estimate the frequency offset in a manner of pairing a frequency domain pilot signal of the first sequence with the pilot signal carried in the information of the valid data to estimate a phase difference.

The user equipment communicating with the base station may obtain corresponding valid data by detecting the physical downlink control channel and the physical downlink shared channel.

In another possible implementation manner, optionally, the method further includes the following step.

Step 304: The base station sends a second sequence from the start moment of the first symbol, where a time length of the second sequence of one period is a time length corresponding to one symbol.

The second sequence may be a part of the foregoing channel reservation signal.

The user equipment communicating with the base station may obtain at least one of fine time-frequency synchronization information of a system, channel feature estimation information, or an estimated value and a specified value of automatic gain control by detecting the second sequence.

In a specific process of performing step 304, it should be understood that the time length of the second sequence of one period corresponds to the time length of one period. As described above, from the perspective of a time domain, one symbol may be divided into a cyclic prefix part and an information segment part. The second sequence of one period may also be divided into a cyclic prefix part and an information segment part. The information segment part includes all information of the second sequence, and the cyclic prefix part cyclically repeats a partial sequence of the second sequence.

In a specific process of performing step 304, optionally, if the time interval between the first moment and the start moment of the first symbol is less than the time length of one symbol that does not include a CP, the base station cyclically sends the second sequence Y times from the start moment of the first symbol. Alternatively, if the time interval between the first moment and the start moment of the first symbol is not less than the time interval of one symbol that does not include a CP, the base station cyclically sends the second sequence Y-1 times from the start moment of the first symbol. Y is a preconfigured positive integer.

In a specific process of performing step 304, optionally, if the time interval between the first moment and the start moment of the first symbol is less than the time length of one symbol, the base station cyclically sends the second sequence Y times from the start moment of the first symbol. Alternatively, if the time interval between the first moment and the start moment of the first symbol is not less than the time interval of one symbol, the base station cyclically sends the second sequence Y-1 times from the start moment of the first symbol. Y is a preconfigured positive integer.

In a specific process of performing step 304, with reference to a system parameter of the LAA-LTE system, a value of Y is preferably not less than four, so that the corresponding user equipment obtains fine time frequency synchronization information and channel feature estimation information. Preferably, the value of Y is 4.

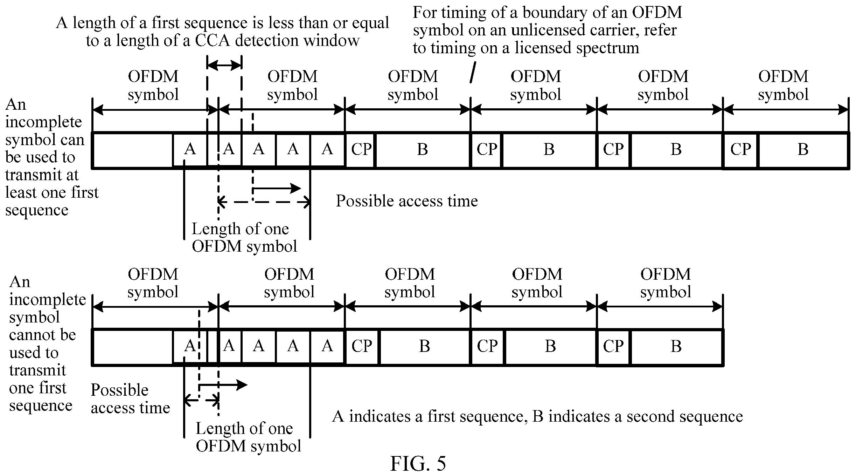

FIG. 5 is a schematic diagram of a sequence diagram for sending a first sequence and a second sequence.

Optionally, a frequency domain sequence corresponding to the second sequence of one period may be mapped in a fullband of a frequency domain. Optionally, a subcarrier is reserved at an edge frequency of the corresponding frequency domain sequence, and sequence mapping is not performed on the subcarrier, so as to avoid inter-carrier interference. Optionally, the sequence mapping is not performed on the subcarrier near a direct current component of the corresponding frequency domain sequence.

In another manner of performing step 304, optionally, the base station cyclically sends the second sequence from the start moment of the first symbol to a start moment of a next subframe.

In another process of performing step 304, optionally, the base station cyclically sends the second sequence Y times from the start moment of the first symbol. Y is a preconfigured positive integer. Preferably, a value of Y is 4.

In a specific implementation process, optionally, the second sequence is specifically a constant amplitude zero auto correlation sequence (English: Constant Amplitude Zero Auto Correlation, CAZAC for short), or the second sequence is specifically a pseudo-random sequence. The user equipment receiving the second sequence obtains at least one of AGC settings, fine synchronization information, or channel feature estimation information according to the second sequence.

In a specific implementation process, optionally, the second sequence may be used to carry information, and the carried information includes at least one of the following:

1. operator identification information, so that the user equipment communicating with the base station determines the base station sending the second sequence, where a neighboring-cell base station relative to a current-cell base station may also identify the current-cell base station by using the operator identification information carried by the second sequence;

2. information about a licensed spectrum resource supported by the base station, so that the user equipment determines, according to the second sequence, whether the base station also supports communication performed on a channel of a licensed spectrum, or determines a channel of a licensed spectrum on which the base station performs communication, where further, when the base station supports communication performed on both the licensed spectrum and the unlicensed spectrum, the user equipment may assist in carrier coarse synchronization of the unlicensed spectrum by using synchronization information provided by a reference signal of the licensed spectrum;

3. information about a quantity of remaining available symbols of a current subframe when the base station obtains the permission for the channel of the unlicensed spectrum;

4. information about a length of duration in which the base station currently transmits a signal; or

5. serving cell identification information or partial serving cell identification information.

In a specific implementation process, optionally, the first sequence and the second sequence separately carry partial serving cell identification information, and the user equipment communicating with the base station may determine serving cell identification information according to the partial serving cell identification information separately carried by the first sequence and the second sequence. For example, in a specific method, it is assumed that a total quantity of serving cells is Cell_ID, and the serving cells are grouped into p groups. The partial serving cell identification information carried by the first sequence is used to indicate a group that is of the p groups and in which a cell served by the base station is specifically located. The partial serving cell identification information carried by the second sequence is used to indicate a specific cell that is in the p groups and that is served by the base station.

In a specific implementation process, further, optionally, the base station sends valid data from a moment at which the base station stops sending the second sequence. The signal of the valid data includes one of the following or a combination thereof: a physical downlink control channel, an enhanced physical downlink control channel, a physical downlink shared channel, a common reference signal, a demodulation reference signal, a channel state information-reference signal, or a discovery reference signal.

A receiving device may obtain at least one of system AGC settings, fine time-frequency synchronization information, or channel feature estimation information by detecting the second sequence and a pilot signal that is carried in information of the valid data. It should be known that the receiving device may estimate a frequency offset in a manner of pairing reference signals separated from each other with an interval to estimate a phase difference. With reference to a system parameter of the LAA-LTE system, to obtain fine frequency synchronization that can ensure demodulation performance, a time length of an interval between reference signals used to estimate a frequency offset is not less than three symbols. Preferably, the time length of the interval between the reference signals used to estimate the frequency offset is four symbols. That is, a receiving end may jointly estimate a frequency offset by using reference signals on an $n_0^{th}$ symbol and an $(n_0+3)^{th}$ symbol, where no is any symbol index. Optionally, the receiving device may jointly estimate the frequency offset in a manner of pairing a frequency domain pilot signal of the second sequence with the pilot signal carried in the information of the valid data to estimate a phase difference. Optionally, under the circumstance of satisfying a time length of an interval between reference signals, the receiving device may further jointly estimate a frequency offset in a manner of pairing a frequency domain pilot signal of the first sequence with a frequency domain pilot signal of the second sequence to estimate a phase difference.

The user equipment communicating with the base station may obtain corresponding valid data by detecting the physical downlink control channel and the physical downlink shared channel.

In a specific implementation process, optionally, an existing LTE subframe format is reused as a sending structure of information of the valid data. Specifically, the LTE subframe format is reused for the information of the valid data from a format of a first symbol of the LTE subframe format. Alternatively, a downlink pilot timeslot (English: Downlink Pilot Time Slot, DwPTS for short) subframe format in the LTE system is reused for the information of the valid data.

According to the method provided in this embodiment of the present invention, after obtaining a permission for a channel of an unlicensed spectrum, a base station cyclically sends a first sequence immediately, where a time interval between a first moment and a start moment of a first symbol is not less than a time length of the first sequence of one period, the time length of the first sequence of one period is not greater than a time length of a symbol that does not include a CP, and the first sequence is a characteristic sequence of an LAA-LTE system. According to the method provided in this embodiment of the present invention, a base station achieves an objective of occupying a channel. Further, the base station transmits, on a channel of an unlicensed spectrum, a sequence that is of at least one period and that has a feature of an LAA-LTE system, to directly instruct, on the channel of the current unlicensed spectrum, user equipment to communicate with the base station on the channel of the unlicensed spectrum. Therefore, it is avoided that resource waste is caused by transmitting signaling on an extra channel resource on a licensed spectrum.

**Embodiment 2**

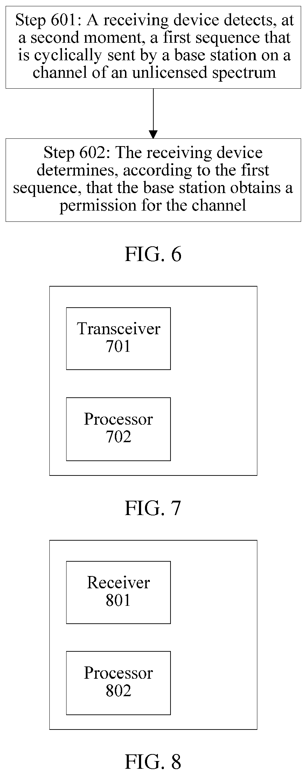

An embodiment of the present invention provides a message transmission method corresponding to Embodiment 1 of the present invention. The method provided in this embodiment of the present invention may be applied to a scenario of a channel of an unlicensed spectrum. FIG. 6 is a schematic flowchart of the method according to this embodiment of the present invention. The shown method may be performed by a receiving device corresponding to the base station in Embodiment 1 of the present invention. The receiving device may be user equipment or may be a neighboring-cell base station. A procedure includes the following steps.

Step 601: The receiving device detects, at a second moment, a first sequence that is cyclically sent by a base station on a channel of an unlicensed spectrum, where the first sequence is a characteristic sequence of an LAA-LTE system, a time length of the first sequence of one period is not greater than a time length of one symbol that does not include a CP, and the second moment is not later than a start moment of a first symbol at which transmission of the first sequence is stopped.

Step 602: The receiving device determines, according to the first sequence, that the base station obtains the permission for the channel.

In a specific implementation process, the receiving device may further perform, according to the first sequence, at least one of the following operations: initial access detection, automatic gain control, time-frequency synchronization, channel feature estimation, or signal identification.

It should be understood that, in the method provided in this embodiment of the present invention, a method used by the base station to obtain the permission for the channel of the unlicensed spectrum is the same as that in the specific process of performing step 301 in Embodiment 1 of the present invention. Details are not described herein again.

It should be understood that, in the method provided in this embodiment of the present invention, the first moment at which the base station obtains the permission for the channel of the unlicensed spectrum is the same as the definition in the specific process of performing step 301 in Embodiment 1 of the present invention. Details are not described herein again.

It should be understood that, in the method provided in this embodiment of the present invention, the method used by the base station to send a channel reservation signal on the channel of the unlicensed spectrum is the same as the definition in the specific process of performing step 301 in Embodiment 1 of the present invention. Details are not described herein again.

In the method provided in this embodiment of the present invention, the second moment at which the receiving device detects the first sequence is not later than a start moment of a first symbol at which transmission of the first sequence is stopped. It should be understood that in this embodiment of the present invention, it is considered that a signal is immediately received after being sent, and a delay caused by a device in sending and receiving processes and a delay caused by a distance existing between the base station and the receiving device are ignored.

In a specific process of performing step 601, the receiving device corresponding to the base station, such as corresponding user equipment or a corresponding neighboring-cell base station, may perform detection on the channel of the unlicensed spectrum. Because the receiving device cannot know the first moment at which the base station sends the first sequence, the receiving device performs blind detection. Specifically, the receiving device may perform detection according to a characteristic that the first sequence is a characteristic sequence of an LAA-LTE system, so as to determine whether a received signal includes the first sequence. A specific detection method may be a time domain correlation method or a frequency domain correlation method, and is not limited in the present invention.

In a specific process of performing step 601, because the time length of the first sequence of one period is less than the time length of the symbol that does not include a CP, the receiving device can quickly detect the first sequence, so as to quickly determine that the base station obtains the permission for the channel of the unlicensed spectrum.

In a specific process of performing step 601, when the receiving device is specifically user equipment, the user equipment may determine, according to the first sequence, that the base station already obtains the permission for the channel of the unlicensed spectrum. Therefore, it is avoided that a resource of a licensed spectrum needs to be used to transmit signaling to notify the user equipment that the base station obtains the permission for the channel of the unlicensed spectrum.

In a specific process of performing step 601, when the receiving device is specifically a base station device of a neighboring cell, a neighboring-cell base station may determine, according to the first sequence, that the permission for the channel of the unlicensed spectrum is already occupied by a base station that is also located in the LAA-LTE system. Correspondingly, the neighboring-cell base station may perform corresponding operations according to the detected first sequence: determining, by the neighboring-cell base station according to the detected first sequence, that a channel resource of the unlicensed spectrum is already occupied by another communications system, and detecting, by the neighboring-cell base station, another channel resource of the unlicensed spectrum, or continuing to perform sensing on a current channel, so as to wait until the current channel is idle again. Further, in consideration of that communications devices of the LAA-LTE system have relatively desirable co-channel interference immunity performance, the neighboring-cell base station determines, according to the characteristic that the first sequence is the characteristic sequence of the LAA-LTE system, that the base station sending a signal on the channel of the current unlicensed spectrum belongs to the LAA-LTE system, and the neighboring-cell base station may determine again, according to an extent to which the system can tolerate an interference signal, whether the signal is to be sent on the current channel, and ensure that communication of the base station that is currently sending the first sequence is affected to an acceptable extent.

In a specific implementation process, it should be understood that randomness of the first moment from which the base station sends the first sequence causes uncertainty of the time interval between the first moment and the start moment of the first symbol. Because the first sequence has a determinate time length, a quantity of periods in which the base station sends the first sequence in the time interval may be an integer or a non-integer.

In a specific implementation process, it should be understood that because the base station sends the first sequence cyclically in the time interval between the first moment and the start moment of the first symbol, the receiving device does not need perform CP removal processing when detecting the first sequence.

Based on the foregoing technical method, the receiving device may determine, according to the first sequence that is detected on the channel of the unlicensed spectrum, that the base station obtains the permission for the channel, and start sending a signal on the channel. According to the method provided in this embodiment of the present invention, it is avoided that the base station transmits an indication message by using a channel resource of a licensed spectrum, and channel resources of the licensed spectrum are saved.

Further, optionally, in the manner in which the base station obtains the permission for the channel of the unlicensed spectrum based on the principle of the LBT by using the contention-based method, the time length of the first sequence of one period may be not greater than a time length that is used by a system to perform clear channel assessment. For example, in the LAA-LTE system, the time length of the first sequence of one period may be not greater than a time length that is used by the base station or a neighboring-cell base station to perform CCA detection. In this way, a neighboring-cell base station or a WiFi device or another communications device in the LAA-LTE system that shares the channel of the unlicensed spectrum with a current-cell base station detects the first sequence while performing CCA detection.

Further, optionally, in a specific implementation process, the time interval between the first moment from which the base station sends the first sequence and the start moment of the first symbol is less than a time length of two symbols. Specifically, when a time interval between the first moment and a start moment of a first symbol after the first moment is not less than the time length of the first sequence of one period, the start moment of the first symbol may be specifically the start moment of the first symbol after the first moment. When the time interval between the first moment and the start moment of the first symbol after the first moment is less than the time length of the first sequence of one period, the start moment of the first symbol may be specifically a start moment of a second symbol after the first moment. That is, the time interval between the start moment of the first symbol and the first moment is greater than a time length of one symbol and is less than a time length of two symbols.

Further, optionally, the first sequence may carry indication information, used to indicate a quantity of symbols that correspond to the time interval. Specifically, when the time interval is greater than or equal to the time length of one symbol that does not include a CP, the indication information carried by the first sequence is used to indicate that the quantity of symbols that correspond to the time interval is 1. When the time interval is less than the time length of one symbol that does not include a CP, the indication information carried by the first sequence is used to indicate that the quantity of symbols that correspond to the time interval is 0. In a specific implementation process, the receiving device communicating with the base station may determine, by detecting the first sequence, a moment for stopping sending the first sequence and starting sending another signal.

Further, optionally, the first sequence may carry indication information, used to indicate a quantity of symbols that correspond to the time interval. Specifically, when the time interval is greater than or equal to the time length of one symbol, the indication information carried by the first sequence is used to indicate that the quantity of symbols that correspond to the time interval is 1. When the time interval is less than the time length of one symbol, the indication information carried by the first sequence is used to indicate that the quantity of symbols that correspond to the time interval is 0. In a specific implementation process, the receiving device communicating with the base station may determine, by detecting the first sequence, a moment for stopping sending the first sequence and starting sending another signal.

In a specific implementation process, the first sequence may further carry other information. The information is the same as the information carried in the first sequence in Embodiment 1 of the present invention, and details are not described herein again. The user equipment may obtain, according to the detected first sequence, the information carried in the first sequence.

In a specific implementation process, optionally, the method used by the base station to cyclically send the first sequence includes at least the foregoing two methods mentioned in Embodiment 1 of the present invention, that is, the two cases shown in FIG. 4. Details are not described herein again. Preferably, in the second case shown in FIG. 4, because the last element of the first sequence is aligned with the start moment of the first symbol, that is, the base station sends the last element of the first sequence just at the start moment of the first symbol. In other words, in the second case shown in FIG. 4, the start moment of the first symbol is just aligned with the last element of the cyclically sent first sequence. The receiving device communicating with the base station may perform, according to this feature, time synchronization on the signal received on the channel of the unlicensed spectrum.

In a specific implementation process, the first sequence may include a CAZAC sequence, and more specifically, may include a ZC sequence. A property related to the first sequence specifically including the CAZAC sequence or more specifically including the ZC sequence is already described in detail in Embodiment 1 of the present invention, and this is not described again in this embodiment of the present invention.

In a specific implementation process, optionally, a frequency domain sequence that is in a frequency domain and that corresponds to the first sequence whose time domain period is extended to a symbol that does not include a CP satisfies a property of mapping with an equal subcarrier spacing. Related content is already described in detail in Embodiment 1 of the present invention, and is not described again in this embodiment of the present invention.

In a specific implementation process, optionally, the receiving device may obtain, in a manner predefined or preconfigured by the base station or in a manner of performing notification by using signaling of a channel resource of a licensed spectrum, one of the following information or a combination thereof: a time length of a first sequence of one period, a mapping interval I of a frequency domain sequence, a sequence candidate set of a first sequence, or a power boosting factor.

In a specific implementation process, optionally, when the indication information carried by the first sequence obtained by the receiving device indicates that the quantity of symbols corresponding to the time interval is not less than 1, the receiving device determines, according to a location that is not mapped in the frequency domain sequence, a power of an interference signal in the detected first sequence. Specifically, at frequency locations that are not mapped, mapping signals of the corresponding frequency locations are 0, so that the user equipment communicating with the base station or another communications device performs interference detection according to these frequency locations whose mapping signals are 0. Specifically, using the user equipment as an example, when the user equipment receives the first sequence some of whose mapping signals are 0, the user equipment may detect a signal power at the frequency locations whose mapping signals are 0, to estimate a power of an interference signal according to the detected signal power.

It should be known that interference detection should be completed in a frequency domain. Therefore, a signal used for detection needs to last, in time, at least a length of one symbol that does not include a CP.

In a specific implementation process, optionally, the method further includes the following steps.

Step 603: The receiving device sends valid data from the start moment of the first symbol, where the signal of the valid data includes one of the following or a combination thereof: a physical downlink control channel, an enhanced physical downlink control channel, a physical downlink shared channel, a common reference signal, a demodulation reference signal, a channel state information-reference signal, or a discovery reference signal.

The base station may send the signal of the valid data as fast as possible after obtaining the permission for the channel of the unlicensed spectrum, so as to further improve usage efficiency of a channel resource of the unlicensed spectrum. The corresponding user equipment may determine, according to the first sequence, the start moment of the first symbol at which the valid data is sent, so as to start receiving the valid data from the start moment of the first symbol, and demodulate and decode the received valid data.

Further, optionally, the receiving device may obtain at least one of system AGC settings, fine time-frequency synchronization information, or channel feature estimation information by detecting the first sequence and a pilot signal that is carried in information of the valid data. It should be known that the receiving device may estimate a frequency offset in a manner of pairing reference signals separated from each other with an interval to estimate a phase difference. With reference to a system parameter of the LAA-LTE system, to obtain fine frequency synchronization that can ensure demodulation performance, a time length of an interval between reference signals used to estimate a frequency offset is not less than three symbols. Preferably, the time length of the interval between the reference signals used to estimate the frequency offset is four symbols. That is, a receiving device may jointly estimate a frequency offset by using reference signals on an $n_0$th symbol and an $(n_0+3)$th symbol, where $n_0$ is any symbol index. Optionally, the receiving device may jointly estimate the frequency offset in a manner of pairing a frequency domain pilot signal of the first sequence with the pilot signal carried in the information of the valid data to estimate a phase difference.

The receiving device communicating with the base station may obtain corresponding valid data by detecting the physical downlink control channel and the physical downlink shared channel.

It should be understood that in the prior art, in consideration of that the corresponding receiving device needs to know a start location of the valid data when decoding the data, the valid data can usually start to be sent on the channel of the unlicensed spectrum only from a start moment of a subframe. Otherwise, the receiving device can perform only blind detection. As a result, power consumption and complexity of the user equipment are increased. However, according to the method provided in this embodiment of the present invention, the receiving device may determine, according to the first sequence, the start moment of the first symbol at which the valid data starts to be sent, that is, may directly know a start location at which the valid data is decoded. Therefore, it is avoided that operation complexity and power consumption on a side of the receiving device are increased.

In another possible implementation manner, optionally, the method further includes the following step.

Step 604: The receiving device receives a second sequence from the start moment of the first symbol, where a time length of the second sequence of one period is a time length corresponding to one symbol.

The receiving device determines, according to the received second sequence, at least one of the following information:

automatic gain control, time-frequency synchronization information, or channel feature estimation information.

In a specific process of performing step 604, optionally, the receiving device determines, according to the indication information that is carried by the first sequence to indicate the quantity of symbols that correspond to the time interval, a quantity of periods in which the second sequence appears from the start moment of the first symbol. The receiving device receives the second sequence from the start moment of the first symbol according to the indication information. If the quantity of symbols that is indicated by the first sequence is 0, a quantity of times the long period appears from the start moment of the first symbol is Y. Alternatively, if the quantity of symbols that is indicated by the first sequence is 1, a quantity of times the long period appears from the start moment of the first symbol is Y-1. Y is a preconfigured positive integer.

In a specific process of performing step 604, with reference to a system parameter of the LAA-LTE system, a value of Y is preferably 4, so that the corresponding user equipment obtains fine time frequency synchronization information and the channel feature estimation information.

In another implementation manner, optionally, the base station cyclically sends the second sequence from the start moment of the first symbol to a start moment of a next subframe. The corresponding receiving device receives the second sequence from the start moment of the first symbol to the start moment of the next subframe.

In another implementation method, optionally, the base station cyclically sends the second sequence Y times from the start moment of the first symbol. Y is a preconfigured positive integer. Preferably, a value of Y is 4. The corresponding receiving device receives the second sequence Y times from the start moment of the first symbol.

In a specific implementation process, optionally, the second sequence is specifically a constant amplitude zero auto correlation sequence (English: Constant Amplitude Zero Auto Correlation, CAZAC for short), or the second sequence is specifically a pseudo-random sequence. The user equipment receiving the second sequence obtains fine synchronization information, channel feature estimation information, and the like according to the second sequence.

In a specific implementation process, optionally, the second sequence may be used to carry information, and the receiving device may obtain, by detecting the first sequence, the information carried by the second sequence. The specifically carried information is the same as the information that can be carried in the second sequence in Embodiment 1 of the present invention, and details are not described herein in this embodiment of the present invention.

In a specific implementation process, optionally, the first sequence and the second sequence separately carry partial serving cell identification information, and the receiving device may determine serving cell identification information according to the partial serving cell identification information separately carried by the first sequence and the second sequence. For example, in a specific method, it is assumed that a total quantity of serving cells is Cell_ID, and the serving cells are grouped into p groups. The partial serving cell identification information carried by the first sequence is used to indicate a group that is of the p groups and in which a cell served by the base station is specifically located. The partial serving cell identification information carried by the second sequence is used to indicate a specific cell that is in the p groups and that is served by the base station.

In a specific implementation process, further, optionally, the receiving device receives valid data from a moment at which transmission of the second sequence is stopped. The signal of the valid data includes one of the following or a combination thereof: a physical downlink control channel, an enhanced physical downlink control channel, a physical downlink shared channel, a common reference signal, a demodulation reference signal, a channel state information-reference signal, or a discovery reference signal.

The receiving device may obtain at least one of system AGC settings, fine time-frequency synchronization information, or channel feature estimation information by detecting the second sequence and a pilot signal that is carried in information of the valid data. It should be known that the receiving device may estimate a frequency offset in a manner of pairing reference signals separated from each other with an interval. With reference to a system parameter of the LAA-LTE system, to obtain fine frequency synchronization that can ensure demodulation performance, a time length of an interval between reference signals used to estimate a frequency offset is not less than three symbols. Preferably, the time length of the interval between the reference signals used to estimate the frequency offset is four symbols. That is, a receiving device may jointly estimate a frequency offset by using reference signals on an $n_0^{th}$ symbol and an $(n_0+3)^{th}$ symbol, where no is any symbol index. Optionally, the receiving device may jointly estimate the frequency offset in a manner of pairing a frequency domain pilot signal of the second sequence with the pilot signal carried in the information of the valid data to estimate a phase difference. Optionally, under the circumstance of satisfying a time length of an interval between reference signals, the receiving device may further jointly estimate a frequency offset in a manner of estimating a phase difference by pairing a frequency domain pilot signal of the first sequence with a frequency domain pilot signal of the second sequence.

The receiving device communicating with the base station may obtain corresponding valid data by detecting the physical downlink control channel and the physical downlink shared channel.

In a specific implementation process, optionally, an existing LTE subframe format is reused as a sending structure of information of the valid data. Specifically, the LTE subframe format is reused for the information of the valid data from a format of a first symbol of the LTE subframe format. Alternatively, a downlink pilot timeslot (English: Downlink Pilot Time Slot, DwPTS for short) subframe format in the LTE system is reused for the information of the valid data.

Based on the foregoing technical method, a receiving device may determine, according to a first sequence that is detected on a channel of an unlicensed spectrum, that a base station obtains a permission for the channel, and start sending a signal on the channel. According to the method provided in this embodiment of the present invention, transmitting an indication message by a base station by using a channel resource of a licensed spectrum is avoided, thereby reducing channel resources of the licensed spectrum.

**Embodiment 3**

This embodiment of the present invention provides a message transmission apparatus, so as to implement the message transmission method provided in Embodiment 1 of the present invention. FIG. 7 shows a smallest architecture of the message transmission apparatus provided in this embodiment of the present invention. The apparatus includes at least a transceiver 701 and a processor 702.

Scheduled by the processor 702, the transceiver 701 is configured to obtain a permission for a channel of an unlicensed spectrum at a first moment.

The transceiver 701 is further configured to cyclically send a first sequence from the first moment to a start moment of a first symbol.

A time interval between the first moment and the start moment of the first symbol is not less than a time length of the first sequence of one period, the time length of the first sequence of one period is not greater than a time length of a symbol that does not include a CP, and the first sequence is a characteristic sequence of an LAA-LTE system.

In a specific implementation process, optionally, the time interval between the first moment and the start moment of the first symbol is less than a time length of two symbols, and the first sequence carries indication information, used to indicate a quantity of symbols that correspond to the time interval.

In a specific implementation process, optionally, the transceiver 701 being configured to cyclically send a first sequence from the first moment to a start moment of a first symbol includes:

cyclically sending the first sequence from a $0^{th}$ element of the first sequence; or
cyclically sending the first sequence from a $k^{th}$ element of the first sequence, where
the first sequence includes N elements, the N elements are sequentially numbered 0, 1, ..., and N-1, N is a positive integer, and k satisfies k=(N-(M mod N)) mod N; and
M satisfies $M = \lfloor T_i/T_u \rfloor$, where $T_i$ is the time interval between the first moment and the start moment of the first symbol, $T_u$ is a time length of one element of the first sequence, and $\lfloor \ \rfloor$ indicates rounding down.

In a specific implementation process, optionally, a frequency domain sequence that is in a frequency domain and that corresponds to the first sequence whose time domain period is extended to a symbol that does not include a CP satisfies a property of mapping with an equal subcarrier spacing.

Optionally, the mapping with an equal subcarrier spacing that the frequency domain sequence satisfies includes direct mapping with an equal subcarrier spacing, where a mapped frequency domain location x includes:

$$x = n \cdot I + m, \quad 0 \le n \le S-1, 0 \le x \le F-1,$$

where the frequency domain sequence includes S elements, the S elements are sequentially numbered 0, 1, ..., and S-1, S is a positive integer, and n indicates an $n^{th}$ element in the frequency domain sequence; F indicates that a frequency domain includes F available mapped frequency domain locations, and the F available mapped frequency domain locations are numbered 0, 1, ..., and F-1; I indicates a frequency domain mapping interval, and I is an integer not less than two; m indicates a mapped location of an element numbered 0 in the frequency domain sequence, and m is an integer not greater than I-1; and a mapping signal at a location that is not mapped in the frequency domain sequence is 0.

Optionally, the mapping with an equal subcarrier spacing that the frequency domain sequence satisfies includes symmetric mapping with an equal subcarrier spacing, where a mapped frequency domain location x includes:

$$x = \begin{cases} n \cdot I + m & 0 \le n \le S/2 - 1, \\ n \cdot I + (I - 1 - m) & S/2 \le n \le S - 1, \end{cases} \quad 0 \le x \le F\text{-}1,$$

where the frequency domain sequence includes S elements, the S elements are sequentially numbered 0, 1, ..., and S-1, S is a positive integer, and n indicates an $n^{th}$ element in the frequency domain sequence; F indicates that a frequency domain includes F available mapped frequency domain locations, and the F available mapped frequency domain locations are numbered 0, 1, ..., and F-1; I indicates a frequency domain mapping interval, and I is an integer not less than two; m indicates a mapped location of an element numbered 0 in the frequency domain sequence, and m is an integer not greater than I-1; and a mapping signal at a location that is not mapped in the frequency domain sequence is 0.

In a specific implementation process, optionally, the frequency domain mapping interval corresponds to coverage of a cell served by the apparatus, where a frequency domain mapping interval corresponding to a cell having large coverage is less than a frequency domain mapping interval corresponding to a cell having small coverage.

In a specific implementation process, optionally, the first sequence includes a centrosymmetric ZC sequence.

In a specific implementation process, optionally, the first sequence further carries at least one of the following information:

operator identification information; information about a licensed spectrum resource supported by the apparatus; information about a quantity of symbols that are included between the first moment and a start moment of a predefined subframe; or

information about a length of duration in which the apparatus performs current transmission; or serving cell identification information.

In a specific implementation process, optionally, the transceiver 701 is further configured to send a valid data signal from the start moment of the first symbol, where the signal of the valid data includes at least one of the following: a physical downlink control channel, an enhanced physical downlink control channel, a physical downlink shared channel, a common reference signal, a demodulation reference signal, a channel state information-reference signal, or a discovery reference signal.

In a specific implementation process, optionally, the transceiver 701 is further configured to: the transceiver 701 sends a second sequence from the start moment of the first symbol, where a time length of the second sequence is a time length corresponding one symbol.

In a specific implementation process, optionally, the sending, by the transceiver 701, the second sequence from the start moment of the first symbol includes: if the time interval between the first moment and the start moment of the first symbol is less than a time length of one symbol, cyclically sending, by the transceiver 701, the second sequence Y times from the start moment of the first symbol; or if the time interval between the first moment and the start moment of the first symbol is not less than a time length of one symbol, cyclically sending, by the transceiver 701, the second sequence Y-1 times from the start moment of the first symbol, where Y is a preconfigured positive integer.

In a specific implementation process, optionally, that Y is a preconfigured positive integer includes: Y includes a positive integer not less than four.

In a specific implementation process, optionally, the sending, by the transceiver 701, the second sequence from the start moment of the first symbol includes: cyclically sending, by the transceiver 701, the second sequence from the start moment of the first symbol to a start moment of a next subframe.

In a specific implementation process, optionally, the second sequence is specifically a CAZAC sequence; or the second sequence is specifically a pseudo-random sequence.

In a specific implementation process, optionally, the second sequence carries information, and the carried information includes one of the following or a combination thereof: operator identification information, information about a licensed spectrum resource supported by the base station, information about a quantity of symbols that are included between the first moment and a start moment of a next subframe, information about a length of duration in which the base station performs current transmission, or serving cell identification information.

After obtaining a permission for a channel of an unlicensed spectrum, the apparatus provided in this embodiment of the present invention cyclically sends a first sequence immediately, where a time interval between a first moment and a start moment of a first symbol is not less than a time length of the first sequence of one period, the time length of the first sequence of one period is not greater than a time length of a symbol that does not include a CP, and the first sequence is a characteristic sequence of an LAA-LTE system. The apparatus provided in this embodiment of the present invention achieves an objective of occupying a channel. Further, the apparatus transmits, on a channel of an unlicensed spectrum, a sequence that is of at least one period and that has a feature of an LAA-LTE system, to directly instruct, on the channel of the current unlicensed spectrum, user equipment to communicate with the base station on the channel of the unlicensed spectrum. Therefore, it is avoided that resource waste is caused by transmitting signaling on an extra channel resource on a licensed spectrum.

**Embodiment 4**

This embodiment of the present invention provides a message transmission apparatus, so as to implement the message transmission method provided in Embodiment 2 of the present invention. FIG. 8 shows a smallest architecture of the message transmission apparatus provided in this embodiment of the present invention. The apparatus includes at least a receiver 801 and a processor 802, where
the receiver 801 is configured to receive a signal on a channel of an unlicensed spectrum;
the processor 802 is configured to detect, at a second moment according to the signal received by the receiver 801, a first sequence that is cyclically sent by a base station on the channel of the unlicensed spectrum, where the first sequence is a characteristic sequence of an LAA-LTE system, a time length of the first sequence of one period is not greater than a time length of one symbol that does not include a CP, and the second moment is not later than a start moment of a first symbol at which transmission of the first sequence is stopped; and
the processor 802 is further configured to determine, according to the first sequence, that the base station obtains a permission for the channel.
In a specific implementation process, optionally, the time interval in which the first sequence is sent on the channel from the first moment to the start moment of the first symbol is less than a time length of two symbols; and the receiver 801 is further configured to obtain indication information carried by the first sequence, where the indication information is used to indicate a quantity of symbols that correspond to the time interval.
In a specific implementation process, optionally, the last element of the first sequence is aligned with the start moment of the first symbol; and the processor 802 is further configured to determine a start moment of a symbol according to the first sequence.
In a specific implementation process, optionally, a frequency domain sequence that is in a frequency domain and that corresponds to the first sequence whose time domain period is extended to a symbol that does not include a CP satisfies a property of mapping with an equal subcarrier spacing.
In a specific implementation process, optionally, the mapping with an equal subcarrier spacing that the frequency domain sequence satisfies includes direct mapping with an equal subcarrier spacing, where a mapped frequency domain location x includes:

$$x = n \cdot I + m, \quad 0 \leq n \leq S-1, 0 \leq x \leq F-1,$$

where the frequency domain sequence includes S elements, the S elements are sequentially numbered 0, 1, ..., and S-1, S is a positive integer, and n indicates an $n^{th}$ element in the frequency domain sequence; F indicates that a frequency domain includes F available mapped frequency domain locations, and the F available mapped frequency domain locations are numbered 0, 1, ..., and F-1; I indicates a frequency domain mapping interval, and I is an integer not less than two; m indicates a mapped location of an element numbered 0 in the frequency domain sequence, and m is an integer not greater than I-1; and a mapping signal at a location that is not mapped in the frequency domain sequence is 0.
In a specific implementation process, optionally, the mapping with an equal subcarrier spacing that the frequency domain sequence satisfies includes symmetric mapping with an equal subcarrier spacing, where a mapped frequency domain location x includes:

$$x = \begin{cases} n \cdot I + m & 0 \leq n \leq S/2 - 1, \\ n \cdot I + (I - 1 - m) & S/2 \leq n \leq S-1, \end{cases} \quad 0 \leq x \leq F-1,$$

where the frequency domain sequence includes S elements, the S elements are sequentially numbered 0, 1, ..., and S-1, S is a positive integer, and n indicates an $n^{th}$ element in the frequency domain sequence; F indicates that a frequency domain includes F available mapped frequency domain locations, and the F available mapped frequency domain locations are numbered 0, 1, ..., and F-1; I indicates a frequency domain mapping interval, and I is an integer not less than two;

m indicates a mapped location of an element numbered 0 in the frequency domain sequence, and m is an integer not greater than I-1; and a mapping signal at a location that is not mapped in the frequency domain sequence is 0.

In a specific implementation process, optionally, when the indication information carried by the first sequence obtained by the receiver 801 indicates that the quantity of symbols corresponding to the time interval is not less than 1, the processor 802 determines, according to a location that is not mapped in the frequency domain sequence, a power of an interference signal in the detected first sequence.

In a specific implementation process, optionally, the first sequence includes a centrosymmetric ZC sequence.

In a specific implementation process, optionally, the first sequence further carries at least one of the following information:

operator identification information, information about a licensed spectrum resource supported by the base station, information about a quantity of symbols that are included between the first moment and a start moment of a next subframe, information about a length of duration in which the base station performs current transmission, or serving cell identification information; and the processor 802 obtains at least one of the foregoing information by detecting the first sequence.

In a specific implementation process, optionally, the receiver 801 is further configured to: the receiver 801 receives valid data from the start moment of the first symbol, where the signal of the valid data includes one of the following or a combination thereof: a physical downlink control channel, an enhanced physical downlink control channel, a physical downlink shared channel, a common reference signal, a demodulation reference signal, a channel state information-reference signal, or a discovery reference signal.

In a specific implementation process, optionally, the processor 802 obtains at least one of system AGC settings, fine time-frequency synchronization information, or channel feature estimation information by detecting the first sequence and a pilot signal that is carried in information of the valid data.

In a specific implementation process, optionally, the receiver 801 is further configured to receives a second sequence from the start moment of the first symbol, where a time length of the second sequence of one period is a time length corresponding to one symbol; the processor 802 is further configured to determine, according to the received second sequence, at least one of the following information: automatic gain control, time-frequency synchronization information, or channel feature estimation information.

In a specific implementation process, optionally, the receiving, by the receiver 801, a second sequence from the start moment of the first symbol includes: determining, by the processor 802 according to the indication information that is carried by the first sequence to indicate the quantity of symbols corresponding to the time interval, a quantity of periods in which the second sequence appears from the start moment of the first symbol; and receiving, by the receiver 801, the second sequence according to the indication information from the start moment of the first symbol. If the quantity of symbols that is indicated by the first sequence is 0, a quantity of times the long period appears from the start moment of the first symbol is Y; or if the quantity of symbols that is indicated by the first sequence is 1, a quantity of times the long period appears from the start moment of the first symbol is Y-1, where Y is a preconfigured positive integer.

In a specific implementation process, optionally, that Y is a preconfigured positive integer includes: Y is specifically a positive integer not less than four.

In a specific implementation process, optionally, the receiving, by the receiver 801, the second sequence from the start moment of the first symbol includes: cyclically receiving, by the receiver 801, the second sequence from the start moment of the first symbol to a start moment of a next subframe.

In a specific implementation process, optionally, the second sequence is specifically a CAZAC sequence; or the second sequence is specifically a pseudo-random sequence.

In a specific implementation process, optionally, the second sequence carries information, and the carried information includes one of the following: operator identification information, information about a licensed spectrum resource supported by the base station, information about a quantity of symbols that are included between the first moment and a start moment of a next subframe, information about a length of duration in which the base station performs current transmission, or serving cell identification information, or a combination thereof; the receiving device obtains at least one of the foregoing information by detecting the first sequence.

The message transmission apparatus provided in this embodiment of the present invention may determine, according to a first sequence that is detected on a channel of an unlicensed spectrum, that a base station obtains a permission for the channel, and start sending a signal on the channel. By means of the apparatus provided in this embodiment of the present invention, it is avoided that the base station transmits an indication message by using a channel resource of a licensed spectrum, and channel resources of the licensed spectrum are saved.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (English: Read-Only Memory, ROM for short), a random access memory (English: Random Access Memory, RAM for short), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A data transmission method, comprising:

   obtaining, by a base station, a permission for a channel of an unlicensed spectrum at a first moment; and
   cyclically sending, by the base station, a first sequence from the first moment to a start moment of a first symbol, wherein
   a time interval between the first moment and the start moment of the first symbol is not less than a time length of the first sequence of one period;
   the time length of the first sequence of one period is not greater than a time length of a symbol that does not comprise a CP; and
   the first sequence is a characteristic sequence of an LAA-LTE system.

2. The method according to claim 1, wherein the time interval between the first moment and the start moment of the first symbol is less than a time length of two symbols, wherein
   the first sequence carries indication information, used to indicate a quantity of symbols that correspond to the time interval.

3. The method according to claim 1 or 2, wherein the cyclically sending, by the base station, a first sequence from the first moment to a start moment of a first symbol comprises:

cyclically sending the first sequence from a $0^{th}$ element of the first sequence; or

cyclically sending the first sequence from a $k^{th}$ element of the first sequence, wherein

the first sequence comprises N elements, the N elements are sequentially numbered 0, 1, ..., and N-1, N is a positive integer, and k satisfies k = $(N-(M \bmod N)) \bmod N$; and

M satisfies $M = \lfloor T_i/T_u \rfloor$, wherein $T_i$ is the time interval between the first moment and the start moment of the first symbol, $T_u$ is a time length of one element of the first sequence, and $\lfloor \ \rfloor$ indicates rounding down.

4. The method according to any one of claims 1 to 3, wherein a frequency domain sequence that is in a frequency domain and that corresponds to the first sequence whose time domain period is extended to a symbol that does not comprise a CP satisfies a property of mapping with an equal subcarrier spacing.

5. The method according to claim 4, wherein the mapping with an equal subcarrier spacing that the frequency domain sequence satisfies comprises direct mapping with an equal subcarrier spacing, wherein a mapped frequency domain location x comprises:

$$x = n \cdot I + m, \quad 0 \le n \le S-1, 0 \le x \le F-1,$$

wherein the frequency domain sequence comprises S elements, the S elements are sequentially numbered 0, 1, ..., and S-1, S is a positive integer, and n indicates an $n^{th}$ element in the frequency domain sequence;

F indicates that a frequency domain comprises F available mapped frequency domain locations, and the F available mapped frequency domain locations are numbered 0, 1, ..., and F-1;

I indicates a frequency domain mapping interval, and I is an integer not less than two;

m indicates a mapped location of an element numbered 0 in the frequency domain sequence, and m is an integer not greater than I-1; and

a mapping signal at a location that is not mapped in the frequency domain sequence is 0.

6. The method according to claim 4, wherein the mapping with an equal subcarrier spacing that the frequency domain sequence satisfies comprises symmetric mapping with an equal subcarrier spacing, wherein a mapped frequency domain location x comprises:

$$x = \begin{cases} n \cdot I + m & 0 \le n \le S/2 - 1, \\ n \cdot I + (I - 1 - m) & S/2 \le n \le S - 1, \end{cases} \quad 0 \le x \le F\text{-}1,$$

wherein the frequency domain sequence also comprises S elements, the S elements are sequentially numbered 0, 1, ..., and S-1, S is a positive integer, and n indicates an $n^{th}$ element in the frequency domain sequence;

F indicates that a frequency domain comprises F available mapped frequency domain locations, and the F available mapped frequency domain locations are numbered 0, 1, ..., and F-1;

I indicates a frequency domain mapping interval, and I is an integer not less than two;

m indicates a mapped location of an element numbered 0 in the frequency domain sequence, and m is an integer not greater than I-1; and

a mapping signal at a location that is not mapped in the frequency domain sequence is 0.

7. The method according to any one of claims 4 to 6, wherein the frequency domain mapping interval corresponds to coverage of a cell served by the base station, wherein a frequency domain mapping interval corresponding to a cell having large coverage is less than a frequency domain mapping interval corresponding to a cell having small coverage.

8. The method according to any one of claims 1 to 7, wherein the first sequence comprises:

a centrosymmetric ZC sequence.

9. The method according to any one of claims 1 to 8, wherein the first sequence further carries at least one of the following information:

operator identification information;
information about a licensed spectrum resource supported by the base station;
information about a quantity of symbols that are comprised between the first moment and a start moment of a predefined subframe;
information about a length of duration in which the base station performs current transmission; or
serving cell identification information.

10. The method according to any one of claims 1 to 9, wherein the method further comprises:

sending, by the base station, a valid data signal from the start moment of the first symbol, wherein the signal of the valid data comprises at least one of the following: a physical downlink control channel, an enhanced physical downlink control channel, a physical downlink shared channel, a common reference signal, a demodulation reference signal, a channel state information-reference signal, or a discovery reference signal.

11. The method according to claims 1 to 9, wherein the method further comprises:

sending, by the base station, a second sequence from the start moment of the first symbol, wherein a time length of the second sequence is a time length corresponding to one symbol.

12. The method according to claim 11, wherein the sending, by the base station, a second sequence from the start moment of the first symbol comprises:

if the time interval between the first moment and the start moment of the first symbol is less than a time length of one symbol, cyclically sending, by the base station, the second sequence Y times from the start moment of the first symbol; or
if the time interval between the first moment and the start moment of the first symbol is not less than a time length of one symbol, cyclically sending, by the base station, the second sequence Y-1 times from the start moment of the first symbol, wherein
Y is a preconfigured positive integer.

13. The method according to claim 12, wherein that Y is a preconfigured positive integer comprises:

Y comprises a positive integer not less than four.

14. The method according to claim 11, wherein the sending, by the base station, a second sequence from the start moment of the first symbol comprises:

starting cyclically sending, by the base station, the second sequence from the start moment of the first symbol to a start moment of a next subframe.

15. The method according to any one of claims 11 to 14, wherein the second sequence is specifically a CAZAC sequence; or
the second sequence is specifically a pseudo-random sequence.

16. The method according to any one of claims 11 to 15, wherein the second sequence carries information, and the carried information comprises one of the following or a combination thereof:

operator identification information;
information about a licensed spectrum resource supported by the base station;
information about a quantity of symbols that are comprised between the first moment and a start moment of a next subframe;
information about a length of duration in which the base station performs current transmission; or
serving cell identification information.

17. A data transmission method, comprising:

detecting, by a receiving device at a second moment, a first sequence that is cyclically sent by a base station on a channel of an unlicensed spectrum, wherein the first sequence is a characteristic sequence of an LAA-LTE system, a time length of the first sequence of one period is not greater than a time length of one symbol that does not comprise a CP, and the second moment is not later than a start moment of a first symbol at which transmission of the first sequence is stopped; and

determining, by the receiving device according to the first sequence, that the base station obtains a permission for the channel.

18. The method according to claim 17, wherein a time interval in which the first sequence is sent on the channel from the first moment to the start moment of the first symbol is less than a time length of two symbols; and

obtaining, by the receiving device, indication information carried by the first sequence, wherein the indication information is used to indicate a quantity of symbols that correspond to the time interval.

19. The method according to claim 17 or 18, wherein the last element of the first sequence is aligned with the start moment of the first symbol; and

the receiving device determines a start moment of a symbol according to the first sequence.

20. The method according to any one of claims 17 to 19, wherein a frequency domain sequence that is in a frequency domain and that corresponds to a first sequence whose time domain period is extended to a symbol that does not comprise a CP satisfies a property of mapping with an equal subcarrier spacing.

21. The method according to claim 20, wherein the mapping with an equal subcarrier spacing that the frequency domain sequence satisfies comprises direct mapping with an equal subcarrier spacing, wherein a mapped frequency domain location x comprises:

$$x = n \cdot I + m, \quad 0 \leq n \leq S-1, 0 \leq x \leq F-1,$$

wherein the frequency domain sequence comprises S elements, the S elements are sequentially numbered 0, 1, ..., and S-1, S is a positive integer, and n indicates an $n^{th}$ element in the frequency domain sequence;

F indicates that a frequency domain comprises F available mapped frequency domain locations, and the F available mapped frequency domain locations are numbered 0, 1, ..., and F-1;

I indicates a frequency domain mapping interval, and I is an integer not less than two;

m indicates a mapped location of an element numbered 0 in the frequency domain sequence, and m is an integer not greater than I-1; and

a mapping signal at a location that is not mapped in the frequency domain sequence is 0.

22. The method according to claim 21, wherein the mapping with an equal subcarrier spacing that the frequency domain sequence satisfies comprises symmetric mapping with an equal subcarrier spacing, wherein a mapped frequency domain location x comprises:

$$x = \begin{cases} n \cdot I + m & 0 \leq n \leq S/2 - 1, \\ n \cdot I + (I - 1 - m) & S/2 \leq n \leq S - 1, \end{cases} \quad 0 \leq x \leq F-1,$$

wherein the frequency domain sequence also comprises S elements, the S elements are sequentially numbered 0, 1, ..., and S-1, S is a positive integer, and n indicates an $n^{th}$ element in the frequency domain sequence;

F indicates that a frequency domain comprises F available mapped frequency domain locations, and the F available mapped frequency domain locations are numbered 0, 1, ..., and F-1;

I indicates a frequency domain mapping interval, and I is an integer not less than two;

m indicates a mapped location of an element numbered 0 in the frequency domain sequence, and m is an integer not greater than I-1; and

a mapping signal at a location that is not mapped in the frequency domain sequence is 0.

23. The method according to claims 20 to 22, wherein when the indication information carried by the first sequence obtained by the receiving device indicates that the quantity of symbols that correspond to the time interval is not less than 1, the receiving device determines, according to a location that is not mapped in the frequency domain sequence, a power of an interference signal in the detected first sequence.

**24.** The method according to any one of claims 17 to 23, wherein the first sequence comprises: a centrosymmetric ZC sequence.

**25.** The method according to claims 17 to 24, wherein the first sequence further carries at least one of the following information:

operator identification information;
information about a licensed spectrum resource supported by the base station;
information about a quantity of symbols that are comprised between the first moment and a start moment of a next subframe;
information about a length of duration in which the base station performs current transmission; or
serving cell identification information; and
the receiving device obtains at least one of the foregoing information by detecting the first sequence.

**26.** The method according to any one of claims 17 to 25, wherein the method further comprises:

receiving, by the receiving device, valid data from the start moment of the first symbol, wherein the signal of the valid data comprises at least one of the following or a combination thereof: a physical downlink control channel, an enhanced physical downlink control channel, a physical downlink shared channel, a common reference signal, a demodulation reference signal, a channel state information-reference signal, or a discovery reference signal.

**27.** The method according to claim 26, wherein the receiving device obtains at least one of system AGC settings, fine time-frequency synchronization information, or channel feature estimation information by detecting the first sequence and a pilot signal that is carried in information of the valid data.

**28.** The method according to any one of claims 17 to 25, wherein the method further comprises: receiving, by the receiving device, a second sequence from the start moment of the first symbol, wherein a time length of the second sequence of one period is a time length corresponding to one symbol; and

determining, by the receiving device according to the received second sequence, at least one of the following information:

automatic gain control, time-frequency synchronization information, or channel feature estimation information.

**29.** The method according to claim 28, wherein the receiving, by the receiving device, a second sequence from the start moment of the first symbol comprises:

determining, by the receiving device according to the indication information that is carried by the first sequence to indicate the quantity of symbols that correspond to the time interval, a quantity of periods in which the second sequence appears from the start moment of the first symbol; and
receiving, by the receiving device, the second sequence according to the indication information from the start moment of the first symbol, wherein
if the quantity of symbols that is indicated by the first sequence is 0, a quantity of times the long period appears from the start moment of the first symbol is Y; or
if the quantity of symbols that is indicated by the first sequence is 1, a quantity of times the long period appears from the start moment of the first symbol is Y-1; and
Y is a preconfigured positive integer.

**30.** The method according to claim 29, wherein that Y is a preconfigured positive integer comprises:

Y is specifically a positive integer not less than four.

**31.** The method according to claim 28, wherein the receiving, by the receiving device, a second sequence from the start moment of the first symbol comprises:

receiving, by the receiving device, the second sequence from the start moment of the first symbol to a start moment of a next subframe.

**32.** The method according to any one of claims 28 to 31, wherein the second sequence is specifically a CAZAC sequence; or
the second sequence is specifically a pseudo-random sequence.

**33.** The method according to any one of claims 28 to 30, wherein the second sequence carries information, and the carried information comprises one of the following or a combination thereof:

operator identification information;
information about a licensed spectrum resource supported by the base station;
information about a quantity of symbols that are comprised between the first moment and a start moment of a next subframe;
information about a length of duration in which the base station performs current transmission; or
serving cell identification information; and
the receiving device obtains at least one of the foregoing information by detecting the first sequence.

**34.** A data transmission apparatus, comprising a transceiver and a processor, wherein scheduled by the processor, the transceiver is configured to obtain a permission for a channel of an unlicensed spectrum at a first moment; and
the transceiver is further configured to cyclically send a first sequence from the first moment to a start moment of a first symbol, wherein
a time interval between the first moment and the start moment of the first symbol is not less than a time length of the first sequence of one period;
the time length of the first sequence of one period is not greater than a time length of a symbol that does not comprise a CP; and
the first sequence is a characteristic sequence of an LAA-LTE system.

**35.** The apparatus according to claim 34, wherein the time interval between the first moment and the start moment of the first symbol is less than a time length of two symbols, wherein
the first sequence carries indication information, used to indicate a quantity of symbols that correspond to the time interval.

**36.** The apparatus according to claim 34 or 35, wherein the transceiver being configured to cyclically send a first sequence from the first moment to a start moment of a first symbol comprises:

cyclically sending the first sequence from a $0^{th}$ element of the first sequence; or
cyclically sending the first sequence from a $k^{th}$ element of the first sequence, wherein
the first sequence comprises N elements, the N elements are sequentially numbered 0, 1, ..., and N-1, N is a positive integer, and k satisfies k=($N$-($M mod N$))mod$N$; and
M satisfies $M = \lfloor T_i/T_u \rfloor$, wherein $T_i$ is the time interval between the first moment and the start moment of the first symbol, $T_u$ is a time length of one element of the first sequence, and $\lfloor \rfloor$ indicates rounding down.

**37.** The apparatus according to any one of claims 34 to 36, wherein a frequency domain sequence that is in a frequency domain and that corresponds to the first sequence whose time domain period is extended to a symbol that does not comprise a CP satisfies a property of mapping with an equal subcarrier spacing.

**38.** The apparatus according to claim 37, wherein the mapping with an equal subcarrier spacing that the frequency domain sequence satisfies comprises direct mapping with an equal subcarrier spacing, wherein a mapped frequency domain location x comprises:

$$x = n \cdot I + m, \quad 0 \leq n \leq S-1, 0 \leq x \leq F-1,$$

wherein the frequency domain sequence comprises S elements, the S elements are sequentially numbered 0, 1, ..., and S-1, S is a positive integer, and n indicates an $n^{th}$ element in the frequency domain sequence;
F indicates that a frequency domain comprises F available mapped frequency domain locations, and the F available mapped frequency domain locations are numbered 0, 1, ..., and F-1;
I indicates a frequency domain mapping interval, and I is an integer not less than two;
m indicates a mapped location of an element numbered 0 in the frequency domain sequence, and m is an integer not greater than I-1; and
a mapping signal at a location that is not mapped in the frequency domain sequence is 0.

39. The apparatus according to claim 37, wherein the mapping with an equal subcarrier spacing that the frequency domain sequence satisfies comprises symmetric mapping with an equal subcarrier spacing, wherein a mapped frequency domain location x comprises:

$$x = \begin{cases} n \cdot I + m & 0 \le n \le S/2 - 1, \\ n \cdot I + (I-1-m) & S/2 \le n \le S-1, \end{cases} \quad 0 \le x \le F\text{-}1 \quad,$$

wherein the frequency domain sequence also comprises S elements, the S elements are sequentially numbered 0, 1, ..., and S-1, S is a positive integer, and n indicates an $n^{th}$ element in the frequency domain sequence;
F indicates that a frequency domain comprises F available mapped frequency domain locations, and the F available mapped frequency domain locations are numbered 0, 1, ..., and F-1;
I indicates a frequency domain mapping interval, and I is an integer not less than two;
m indicates a mapped location of an element numbered 0 in the frequency domain sequence, and m is an integer not greater than I-1; and
a mapping signal at a location that is not mapped in the frequency domain sequence is 0.

40. The apparatus according to any one of claims 37 to 39, wherein the frequency domain mapping interval corresponds to coverage of a cell served by the apparatus, wherein a frequency domain mapping interval corresponding to a cell having large coverage is less than a frequency domain mapping interval corresponding to a cell having small coverage.

41. The apparatus according to any one of claims 34 to 40, wherein the first sequence comprises:

a centrosymmetric ZC sequence.

42. The apparatus according to any one of claims 34 to 41, wherein the first sequence further carries at least one of the following information:

operator identification information;
information about a licensed spectrum resource supported by the apparatus;
information about a quantity of symbols that are comprised between the first moment and a start moment of a predefined subframe;
information about a length of duration in which the apparatus performs current transmission; or
serving cell identification information.

43. The apparatus according to any one of claims 34 to 42, wherein the transceiver is further configured to:

the transceiver sends a valid data signal from the start moment of the first symbol, wherein the signal of the valid data comprises at least one of the following: a physical downlink control channel, an enhanced physical downlink control channel, a physical downlink shared channel, a common reference signal, a demodulation reference signal, a channel state information-reference signal, or a discovery reference signal.

44. The apparatus according to claims 34 to 42, wherein the transceiver is further configured to:

the transceiver sends a second sequence from the start moment of the first symbol, wherein
a time length of the second sequence is a time length corresponding to one symbol.

45. The apparatus according to claim 44, wherein the sending, by the transceiver, a second sequence from the start moment of the first symbol comprises:

if the time interval between the first moment and the start moment of the first symbol is less than a time length of one symbol, cyclically sending, by the transceiver, the second sequence Y times from the start moment of the first symbol; or

if the time interval between the first moment and the start moment of the first symbol is not less than a time length of one symbol, cyclically sending, by the transceiver, the second sequence Y-1 times from the start moment of the first symbol, wherein

Y is a preconfigured positive integer.

46. The apparatus according to claim 45, wherein that Y is a preconfigured positive integer comprises:

Y comprises a positive integer not less than four.

47. The apparatus according to claim 44, wherein the sending, by the transceiver, a second sequence from the start moment of the first symbol comprises:

starting cyclically sending, by the transceiver, the second sequence from the start moment of the first symbol to a start moment of a next subframe.

48. The apparatus according to any one of claims 44 to 47, wherein the second sequence is specifically a CAZAC sequence; or
the second sequence is specifically a pseudo-random sequence.

49. The apparatus according to any one of claims 44 to 48, wherein the second sequence carries information, and the carried information comprises one of the following or a combination thereof:

operator identification information;
information about a licensed spectrum resource supported by the base station;
information about a quantity of symbols that are comprised between the first moment and a start moment of a next subframe;
information about a length of duration in which the base station performs current transmission; or
serving cell identification information.

50. A data transmission apparatus, comprising a receiver and a processor, wherein
the receiver is configured to receive a signal on a channel of an unlicensed spectrum;
the processor is configured to detect, at a second moment according to the signal received by the receiver, a first sequence that is cyclically sent by a base station on the channel of the unlicensed spectrum, wherein the first sequence is a characteristic sequence of an LAA-LTE system, a time length of the first sequence of one period is not greater than a time length of one symbol that does not comprise a CP, and the second moment is not later than a start moment of a first symbol at which transmission of the first sequence is stopped; and
the processor is further configured to determine, according to the first sequence, that the base station obtains a permission for the channel.

51. The apparatus according to claim 50, wherein a time interval in which the first sequence is sent on the channel from the first moment to the start moment of the first symbol is less than a time length of two symbols; and
the receiver is further configured to obtain indication information carried by the first sequence, wherein the indication information is used to indicate a quantity of symbols that correspond to the time interval.

52. The apparatus according to claim 50 or 51, wherein the last element of the first sequence is aligned with the start moment of the first symbol; and
the processor is further configured to determine a start moment of a symbol according to the first sequence.

53. The apparatus according to any one of claims 50 to 52, wherein a frequency domain sequence that is in a frequency domain and that corresponds to the first sequence whose time domain period is extended to a symbol that does not comprise a CP satisfies a property of mapping with an equal subcarrier spacing.

54. The apparatus according to claim 53, wherein the mapping with an equal subcarrier spacing that the frequency domain sequence satisfies comprises direct mapping with an equal subcarrier spacing, wherein a mapped frequency domain location x comprises:

$$x = n \cdot I + m, \quad 0 \leq n \leq S-1, 0 \leq x \leq F-1,$$

wherein the frequency domain sequence comprises S elements, the S elements are sequentially numbered 0, 1, ..., and S-1, S is a positive integer, and n indicates an $n^{th}$ element in the frequency domain sequence;
F indicates that a frequency domain comprises F available mapped frequency domain locations, and the F available mapped frequency domain locations are numbered 0, 1, ..., and F-1;
I indicates a frequency domain mapping interval, and I is an integer not less than two;
m indicates a mapped location of an element numbered 0 in the frequency domain sequence, and m is an integer not greater than I-1; and
a mapping signal at a location that is not mapped in the frequency domain sequence is 0.

**55.** The apparatus according to claim 54, wherein the mapping with an equal subcarrier spacing that the frequency domain sequence satisfies comprises symmetric mapping with an equal subcarrier spacing, wherein a mapped frequency domain location x comprises:

$$x = \begin{cases} n \cdot I + m & 0 \leq n \leq S/2 - 1, \\ n \cdot I + (I - 1 - m) & S/2 \leq n \leq S - 1, \end{cases} \quad 0 \leq x \leq F-1$$

,

wherein the frequency domain sequence also comprises S elements, the S elements are sequentially numbered 0, 1, ..., and S-1, S is a positive integer, and n indicates an $n^{th}$ element in the frequency domain sequence;
F indicates that a frequency domain comprises F available mapped frequency domain locations, and the F available mapped frequency domain locations are numbered 0, 1, ..., and F-1;
I indicates a frequency domain mapping interval, and I is an integer not less than two;
m indicates a mapped location of an element numbered 0 in the frequency domain sequence, and m is an integer not greater than I-1; and
a mapping signal at a location that is not mapped in the frequency domain sequence is 0.

**56.** The apparatus according to claims 53 to 55, wherein when the indication information carried by the first sequence obtained by the receiver indicates that the quantity of symbols that correspond to the time interval is not less than 1, the processor determines, according to a location that is not mapped in the frequency domain sequence, a power of an interference signal in the detected first sequence.

**57.** The apparatus according to any one of claims 50 to 56, wherein the first sequence comprises: a centrosymmetric ZC sequence.

**58.** The apparatus according to claims 50 to 57, wherein the first sequence further carries at least one of the following information:

operator identification information;
information about a licensed spectrum resource supported by the base station;
information about a quantity of symbols that are comprised between the first moment and a start moment of a next subframe;
information about a length of duration in which the base station performs current transmission; or
serving cell identification information; and
the processor obtains at least one of the foregoing information by detecting the first sequence.

**59.** The apparatus according to any one of claims 50 to 58, wherein the receiver is further configured to:

the receiver receives valid data from the start moment of the first symbol, wherein a signal of the valid data comprises at least one of the following or a combination thereof: a physical downlink control channel, an enhanced physical downlink control channel, a physical downlink shared channel, a common reference signal, a demodulation reference signal, a channel state information-reference signal, or a discovery reference signal.

**60.** The apparatus according to claim 59, wherein the processor obtains at least one of system AGC settings, fine time-frequency synchronization information, or channel feature estimation information by detecting the first sequence and a pilot signal that is carried in information of the valid data.

61. The apparatus according to any one of claims 50 to 58, wherein the receiver is further configured to receive a second sequence from the start moment of the first symbol, wherein a time length of the second sequence of one period is a time length corresponding to one symbol; and
the processor is further configured to determine, according to the received second sequence, at least one of the following information:

   automatic gain control, time-frequency synchronization information, or channel feature estimation information.

62. The apparatus according to claim 61, wherein the receiving, by the receiver, a second sequence from the start moment of the first symbol comprises:

   determining, by the processor according to the indication information that is carried by the first sequence to indicate the quantity of symbols that correspond to the time interval, a quantity of periods in which the second sequence appears from the start moment of the first symbol; and
   receiving, by the receiver, the second sequence according to the indication information from the start moment of the first symbol, wherein
   if the quantity of symbols that is indicated by the first sequence is 0, a quantity of times the long period appears from the start moment of the first symbol is Y; or
   if the quantity of symbols that is indicated by the first sequence is 1, a quantity of times the long period appears from the start moment of the first symbol is Y-1; and
   Y is a preconfigured positive integer.

63. The apparatus according to claim 62, wherein that Y is a preconfigured positive integer comprises:

   Y is specifically a positive integer not less than four.

64. The apparatus according to claim 61, wherein the receiving, by the receiver, a second sequence from the start moment of the first symbol comprises:

   receiving, by the receiver, the second sequence from the start moment of the first symbol to the start moment of the next subframe.

65. The apparatus according to any one of claims 61 to 64, wherein the second sequence is specifically a CAZAC sequence; or
the second sequence is specifically a pseudo-random sequence.

66. The apparatus according to any one of claims 61 to 63, wherein the second sequence carries information, and the carried information comprises one of the following or a combination thereof:

   operator identification information;
   information about a licensed spectrum resource supported by the base station;
   information about a quantity of symbols that are comprised between the first moment and a start moment of a next subframe;
   information about a length of duration in which the base station performs current transmission; or
   serving cell identification information; and
   the processor obtains at least one of the foregoing information by detecting the first sequence.

Cyclic prefix　　Information
segment

One OFDM symbol

One subframe

Subcarrier

Subframe

Channel of an
unlicensed spectrum

◄Subframe►◄Subframe►◄Subframe►◄Subframe►

Channel of licensed
spectrum

◄Subframe►◄Subframe►◄Subframe►◄Subframe►

Subframe
boundary

Subframe
boundary

Subframe
boundary

Subframe
boundary

FIG. 1

Cell base station
201

Cell base station
202

User equipment
203

FIG. 2

Step 301: A base station obtains a permission for a channel of an unlicensed spectrum at a first moment

Step 302: The base station cyclically sends a first sequence from the first moment to a start moment of a first symbol

FIG. 3

First moment

First case

First sequence → ← First sequence → ← 

First sequence
of less than
one period

Symbol boundary

Symbol boundary

First moment

Second case

First sequence → ← First sequence →

First sequence
of less than one
period

Symbol boundary

Symbol boundary

FIG. 4

A length of a first sequence is less than or equal to a length of a CCA detection window

For timing of a boundary of an OFDM symbol on an unlicensed carrier, refer to timing on a licensed spectrum

An incomplete symbol can be used to transmit at least one first sequence

| OFDM symbol | | OFDM symbol | | OFDM symbol | | OFDM symbol | | OFDM symbol | | OFDM symbol |

| A | A | A | A | A | CP | B | CP | B | CP | B | CP | B |

Possible access time

Length of one OFDM symbol

An incomplete symbol cannot be used to transmit one first sequence

| OFDM symbol | | OFDM symbol | | OFDM symbol | | OFDM symbol | | OFDM symbol |

| A | A | A | A | A | CP | B | CP | B | CP | B |

Possible access time

Length of one OFDM symbol

A indicates a first sequence, B indicates a second sequence

FIG. 5

EP 3 226 638 A1

Step 601: A receiving device detects, at a second moment, a first sequence that is cyclically sent by a base station on a channel of an unlicensed spectrum

Step 602: The receiving device determines, according to the first sequence, that the base station obtains a permission for the channel

FIG. 6

Transceiver
701

Processor
702

FIG. 7

Receiver
801

Processor
802

FIG. 8

# INTERNATIONAL SEARCH REPORT

| | International application No. |
|---|---|
| | PCT/CN2015/070915 |

## A. CLASSIFICATION OF SUBJECT MATTER

H04W 72/12 (2009.01) i

According to International Patent Classification (IPC) or to both national classification and IPC

## B. FIELDS SEARCHED

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNTXT; CNABS; DWPI; SIPOABS; CNKI; IEEE: frequency spectrum, channel, frequency band, unlicensed, unlicensed frequency spectrum, preamble, first sequence, lte, u-lte, sequence, frequency

## C. DOCUMENTS CONSIDERED TO BE RELEVANT

| Category* | Citation of document, with indication, where appropriate, of the relevant passages | Relevant to claim No. |
|---|---|---|
| A | CN 104012159 A (INTERDIGITAL PATENT HOLDINGS INC.) 27 August 2014 (27.08.2014) the whole document | 1-66 |
| A | CN 103155638 A (NOKIA CORP.) 12 June 2013 (12.06.2013) the whole document | 1-66 |
| A | CN 103370896 A (INTERDIGITAL PATENT HOLDINGS INC.) 23 October 2013 (23.10.2013) the whole document | 1-66 |
| A | WO 2014111309 A1 (ERICSSON TELEFON AB L M) 24 July 2014 (24.07.2014) the whole document | 1-66 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 October 2015 | 23 October 2015 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br>ZHANG, Xinyu<br>Telephone No. (86-10) 62089388 |

Form PCT/ISA /210 (second sheet) (July 2009)

**INTERNATIONAL SEARCH REPORT**
Information on patent family members

International application No.

PCT/CN2015/070915

| Patent Documents referred in the Report | Publication Date | Patent Family | Publication Date |
|---|---|---|---|
| CN 104012159 A | 27 August 2014 | JP 2015505436 A | 19 February 2015 |
| | | US 2013163543 A1 | 27 June 2013 |
| | | KR 20140104498 A | 28 August 2014 |
| | | EP 2795981 A1 | 29 October 2014 |
| | | WO 2013096928 A1 | 27 June 2013 |
| | | TW 201336334 A | 01 September 2013 |
| CN 103155638 A | 12 June 2013 | WO 2012049533 A1 | 19 April 2012 |
| | | US 2013203429 A1 | 08 August 2013 |
| | | EP 2628333 A1 | 21 August 2013 |
| CN 103370896 A | 23 October 2013 | EP 2649744 A1 | 16 October 2013 |
| | | KR 20140017517 A | 11 February 2014 |
| | | JP 5746364 B2 | 08 July 2015 |
| | | WO 2012078565 A1 | 14 June 2012 |
| | | US 2015131536 A1 | 14 May 2015 |
| | | JP 2014500686 A | 09 January 2014 |
| WO 2014111309 A1 | 24 July 2014 | EP 2757850 A1 | 23 July 2014 |
| | | CN 104904298 A | 09 September 2015 |

Form PCT/ISA /210 (patent family annex) (July 2009)